(19)

Europäisches
Patentamt
European
Patent Office
Office européen
des brevets

(11) **EP 4 668 652 A1**

(12) **EUROPEAN PATENT APPLICATION**
published in accordance with Art. 153(4) EPC

(43) Date of publication:
**24.12.2025 Bulletin 2025/52**

(21) Application number: **24757229.0**

(22) Date of filing: **16.02.2024**

(51) International Patent Classification (IPC):
**H04L 5/00** *(2006.01)*  **H04W 72/232** *(2023.01)*
**H04L 25/02** *(2006.01)*  **H04L 27/26** *(2006.01)*

(52) Cooperative Patent Classification (CPC):
**H04L 5/00; H04L 25/02; H04L 27/26; H04W 72/232**

(86) International application number:
**PCT/KR2024/002144**

(87) International publication number:
**WO 2024/172508 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.02.2023 KR 20230020911**

(71) Applicant: **LG Electronics Inc.**
**Yeongdeungpo-gu**
**Seoul 07336 (KR)**

(72) Inventors:
• **GO, Seongwon**
**Seoul 06772 (KR)**
• **KO, Hyunsoo**
**Seoul 06772 (KR)**
• **YANG, Suckchel**
**Seoul 06772 (KR)**
• **SHIN, Seokmin**
**Seoul 06772 (KR)**
• **YOO, Junhyuk**
**Seoul 06772 (KR)**

(74) Representative: **Plasseraud IP**
**104 Rue de Richelieu**
**CS92104**
**75080 Paris Cedex 02 (FR)**

(54) **METHOD FOR TRANSMITTING AND RECEIVING SRS AND DEVICE THEREFOR IN WIRELESS COMMUNICATION SYSTEM**

(57)    A method according to an embodiment of the present specification comprises the steps of: receiving configuration information related to an SRS; and transmitting the SRS on the basis of SRS resources. Initialization related to comb offset hopping and/or cyclic shift hopping configured on the resources is performed on the basis of a period. The period is determined on the basis of at least one of i) a set value, ii) a repetitive factor related to the SRS, iii) a value related to frequency hopping, and/or iv) a slot related to the SRS.

【FIG. 5】

```
                    ┌─────────┐
                    │  Start  │
                    └────┬────┘
                         │
                         ▼
     ┌───────────────────────────────────────────────┐
     │ Receive configuration information related to SRS│──── S510
     └───────────────────────┬───────────────────────┘
                             │
                             ▼
     ┌───────────────────────────────────────────────┐
     │      Transmit SRS based on SRS resource         │──── S520
     └───────────────────────┬───────────────────────┘
                             │
                             ▼
                    ┌─────────┐
                    │   End   │
                    └─────────┘
```

**Description**

[TECHNICAL FIELD]

The present disclosure relates to a method for transmitting and receiving a sounding reference signal (SRS) and a device therefor in a wireless communication system.

[BACKGROUND]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies,, such as dual connectivity, massive multiple input multiple output (MIMO), in-band full duplex, non-orthogonal multiple access (NOMA), super wideband support, and device networking.

Rel-18 MIMO SRS enhancement supports multiple TRPs (e.g., 4 TRPs) for a usage of coordinated joint transmission (CJT). As the number of TRPs increases (antenna switching for a usage of DL CSI acquisition), SRS transmissions increase. It is agreed that a hopping operation is supported for a comb offset value and a cyclic shift value for SRS interference randomization capability improvement with respect to increasing SRS transmission.

[DISCLOSURE]

[TECHNICAL PROBLEM]

When the above-mentioned comb offset hopping/cyclic shift hopping is configured in an SRS resource configured with at least one of repetition frequency hopping and/or sequence group or sequence hopping, an initialization periodicity returning to an origin after the comb offset hopping/cyclic shift hopping is completed may be ambiguous. As a specific example, it may be ambiguous whether the initialization periodicity is defined as a fixed value regardless of repetition/frequency hopping or is determined/defined as a value associated with the repetition/frequency hopping.

An object of the present disclosure is to provide a method for solving the above-described problems.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[TEHNICAL SOLUTION]

A method performed by a user equipment (UE) in a wireless communication system according to an embodiment of the present disclosure comprises receiving configuration information related to a Sounding Reference Signal (SRS) and transmitting the SRS based on the SRS resource.

The configuration information includes information for an SRS resource. Comb offset hopping and/or cyclic shift hopping is configured for the SRS resource. An initialization related to the comb offset hopping and/or the cyclic shift hopping is performed based on a periodicity.

The periodicity is determined based on at least one of i) a configured value, ii) a repetition factor related to the SRS, iii) a value related to frequency hopping, and/or iv) a slot related to the SRS.

The configured value may be a value in units of a radio frame, a slot, or a symbol.

The periodicity may be determined as a product of the repetition factor and the value related to the frequency hopping.

A hopping pattern related to the comb offset hopping and/or the cyclic shift hopping may be based on a pseudo-random sequence.

The initialization may be related to the pseudo-random sequence. The periodicity may be related to a beginning of a radio frame.

The hopping pattern may be determined based on a symbol index of a first symbol of a repetition based on the repetition factor.

The symbol index of the first symbol may be determined based on $\left\lfloor \frac{l'}{R} \right\rfloor$, $l'$ is a symbol number based on a number of symbols configured in the SRS resource, R is the repetition factor, and $\lfloor \rfloor$ is a floor function.

The repetition factor may be larger than 1.

The method further comprises receiving information related to the periodicity.

A factor related to the determination of the periodicity may be indicated based on the information related to the periodicity.

The factor may be i) a value in units of a radio frame, a slot, or a symbol, ii) the repetition factor, iii) the value related to the frequency hopping, iv) a product of the repetition factor and the value related to the frequency hopping, or v) a slot related to the SRS.

A user equipment (UE) operating in a wireless communication according to another embodiment of the present disclosure comprises one or more transceivers, one or more processors, and one or more memories connected to the one or more processors and storing instructions.

The instructions, based on being executed by the one or more processors, configure the one or more processors to perform all steps of any one of the methods.

A device according to another embodiment of the present disclosure comprises one or more memories and one or more processors operably connected to the one or more memories.

The one or more memories are configured to store instructions based on being executed by the one or more processors, and the instructions are configured to allow the one or more processors to perform all steps of any one of the methods.

One or more non-transitory computer readable mediums according to another embodiment of the present disclosure stores instructions. The instructions executable by one or more processors are configured to allow the one or more processors to perform all steps of any one of the methods.

A method performed by a base station in a wireless communication system according to another embodiment of the present disclosure comprises transmitting configuration information related to a Sounding Reference Signal (SRS) and receiving the SRS based on the SRS resource.

The configuration information includes information for an SRS resource. Comb offset hopping and/or cyclic shift hopping is configured for the SRS resource. An initialization related to the comb offset hopping and/or the cyclic shift hopping is performed based on a periodicity.

The periodicity is determined based on at least one of i) a configured value, ii) a repetition factor related to the SRS, iii) a value related to frequency hopping, and/or iv) a slot related to the SRS.

A base station operating in a wireless communication according to another embodiment of the present disclosure comprises one or more transceivers, one or more processors, and one or more memories connected to the one or more processors and storing instructions.

The instructions, based on being executed by the one or more processors, are configured to allow the one or more processors to perform all steps of any one of the methods.

[ADVANTAGEOUS EFFECTS]

According to the embodiment of the present disclosure, an initialization related to comb offset hopping and/or cyclic shift hopping is performed based on at least one of i) a configured radio frame unit periodicity, ii) a repetition factor related to the SRS, and/or iii) a value related to frequency hopping.

A criterion of the comb offset hopping/cyclic shift hopping is clearly defined. When the comb offset hopping/cyclic shift hopping is configured in an SRS resource jointly with repetition/frequency hopping, an ambiguity on a UE operation related to the initialization of the comb offset hopping/cyclic shift hopping can be resolved.

Further, the comb offset hopping/cyclic shift hopping can be initialized according to completion of the repetition and/or frequency hopping. An implementation complexity can be reduced compared to a case in which an initialization of each of comb offset hopping, cyclic shift hopping, and frequency hopping is performed based on various time points/periodicities.

An effect which can be obtained in the present disclosure are not limited to the aforementioned effect and other unmentioned advantages will be clearly understood by those skilled in the art from the following description.

[BRIEF DESCRIPTION OF THE DRAWINGS]

FIG. 1 is a flowchart showing an example of a UL BM procedure using an SRS.

FIG. 2 illustrates an example of a transmission/reception method for reliability enhancement using transmission in multiple TRPs.

FIG. 3 is a diagram illustrating flexible aperiodic SRS transmission timing control.

FIG. 4 is a diagram illustrating partial band SRS transmission.

FIG. 5 is a flowchart for describing a method performed by a user equipment according to an embodiment of the present disclosure.

FIG. 6 is a flowchart for describing a method performed by a BS according to another embodiment of the present disclosure.

FIG. 7 is a diagram illustrating configurations of a first apparatus and a second apparatus according to an embodiment of the present disclosure.

[DETAILED DESCRIPTION]

Hereinafter, preferred embodiments of the disclosure are described in detail with reference to the accompanying drawings. The following detailed description taken in conjunction with the accompanying drawings is intended for describing embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

SRS related operation

The UE may be configured with one or more Sounding Reference Symbol (SRS) resource sets configured by (higher layer parameter) SRS-ResourceSet (through higher layer signaling, RRC signaling, etc.). For each SRS resource set, the UE may be configured with K ($\geq$ 1) SRS resources (higher later parameter SRS-resources). Here, K is a natural number and a maximum value of K is indicated by SRS_capability.

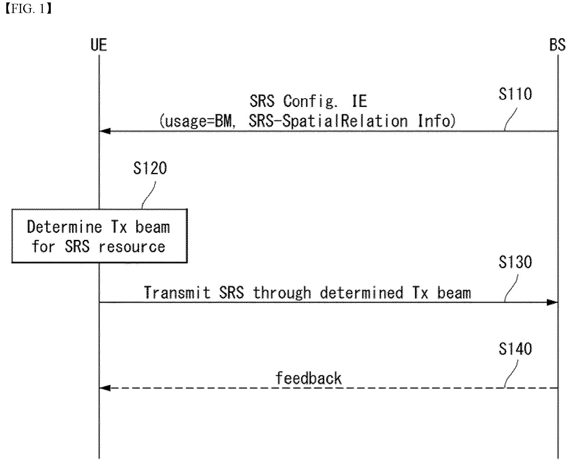

FIG. 1 is a flowchart showing an example of a UL BM procedure using an SRS.

-    The UE receives, from the BS, RRC signaling (e.g., SRS-Config IE) including a usage parameter (S110). As an example, the usage parameter may be configured as 'beam management', 'codebook', 'nonCodebook', or 'antennaSwitching'.

Table 1 represents an example of SRS-Config information element (IE), and the SRS-Config IE is used for SRS transmission configuration. The SRS-Config IE contains a list of SRS-Resources and a list of SRS-Resource sets. Each SRS resource set means a set of SRS resources.

The network may trigger transmission of the SRS resource set using configured aperiodicSRS-ResourceTrigger (L1 DCI).

【Table 1】

```
-- ASN1START
-- TAG-MAC-CELL-GROUP-CONFIG-START

SRS-Config ::=                                              SEQUENCE {
        srs-ResourceSetToReleaseList            SEQUENCE   (SIZE(1..maxNrofSRS-ResourceSets))
OF SRS-ResourceSetId                    OPTIONAL,       -- Need N
        srs-ResourceSetToAddModList             SEQUENCE   (SIZE(1..maxNrofSRS-ResourceSets))
OF SRS-ResourceSet                      OPTIONAL,       -- Need N

        srs-ResourceToReleaseList                       SEQUENCE       (SIZE(1..maxNrofSRS-
Resources)) OF SRS-ResourceId                           OPTIONAL,       -- Need N
        srs-ResourceToAddModList                        SEQUENCE       (SIZE(1..maxNrofSRS-
Resources)) OF SRS-Resource                             OPTIONAL,       -- Need N

        tpc-Accumulation                                        ENUMERATED {disabled}

                OPTIONAL,       -- Need S
        ...
}

SRS-ResourceSet ::=                     SEQUENCE {
    srs-ResourceSetId                           SRS-ResourceSetId,
    srs-ResourceIdList                          SEQUENCE (SIZE(1..maxNrofSRS-ResourcesPerSet)) OF SRS-
ResourceId                  OPTIONAL, -- Cond Setup
    resourceType                                CHOICE {
        aperiodic                               SEQUENCE {
            aperiodicSRS-ResourceTrigger                INTEGER (1..maxNrofSRS-TriggerStates-1),
            csi-RS                                              NZP-CSI-RS-ResourceId
OPTIONAL, -- Cond NonCodebook
            slotOffset                                          INTEGER   (1..32)
OPTIONAL, -- Need S
            ...,
            [[
            aperiodicSRS-ResourceTriggerList            SEQUENCE (SIZE(1..maxNrofSRS-TriggerStates-2))
                                                        OF INTEGER (1..maxNrofSRS-TriggerStates-
1)   OPTIONAL    -- Need M
            ]]
        },
        semi-persistent                         SEQUENCE {
            associatedCSI-RS                            NZP-CSI-RS-ResourceId
OPTIONAL, -- Cond NonCodebook
```

```
        ...
    },
    periodic                          SEQUENCE {
        associatedCSI-RS                          NZP-CSI-RS-ResourceId
OPTIONAL, -- Cond NonCodebook
        ...
    }
},
usage                             ENUMERATED {beamManagement, codebook, nonCodebook,
antennaSwitching},
alpha                                                              Alpha
OPTIONAL, -- Need S
p0                                                    INTEGER   (-202..24)
OPTIONAL, -- Cond Setup
```

```
    pathlossReferenceRS                                   PathlossReferenceRS-Config
OPTIONAL, -- Need M
        srs-PowerControlAdjustmentStates          ENUMERATED  {  sameAsFci2,  separateClosedLoop}
OPTIONAL, -- Need S
    ...,
    [[
    pathlossReferenceRSList-r16                   SetupRelease  {  PathlossReferenceRSList-r16}
OPTIONAL   -- Need M
    ]]
}


PathlossReferenceRS-Config ::=        CHOICE {
    ssb-Index                         SSB-Index,
    csi-RS-Index                      NZP-CSI-RS-ResourceId
}
SRS-PosResourceSet-r16 ::=            SEQUENCE {
    srs-PosResourceSetId-r16          SRS-PosResourceSetId-r16,
    srs-PosResourceIdList-r16         SEQUENCE (SIZE(1..maxNrofSRS-ResourcesPerSet)) OF SRS-
PosResourceId-r16


OPTIONAL, -- Cond Setup
    resourceType-r16                  CHOICE {
        aperiodic-r16                     SEQUENCE {
            aperiodicSRS-ResourceTriggerList-r16    SEQUENCE (SIZE(1..maxNrofSRS-TriggerStates-1))
                                                    OF INTEGER (1..maxNrofSRS-TriggerStates-
1)                    OPTIONAL, -- Need M
            ...
        },
        semi-persistent-r16               SEQUENCE {
            ...
        },
```

6

```
            periodic-r16                              SEQUENCE {
                ...
            }
    },
    alpha-r16                                                                    Alpha
OPTIONAL, -- Need S
    p0-r16                                                          INTEGER  (-202..24)
OPTIONAL, -- Cond Setup
    pathlossReferenceRS-Pos-r16            CHOICE {
        ssb-IndexServing-r16                   SSB-Index,
        ssb-Ncell-r16                          SSB-InfoNcell-r16,
        dl-PRS-r16                             DL-PRS-Info-r16
    }
OPTIONAL, -- Need M
    ...
}


SRS-SpatialRelationInfo ::=          SEQUENCE {
        servingCellId                                        ServCellIndex
                                                             OPTIONAL,        -- Need S
        referenceSignal                          CHOICE {
            ssb-Index                                        SSB-Index,
            csi-RS-Index                                     NZP-CSI-RS-
ResourceId,
            srs
        SEQUENCE {
                resourceId                                   SRS-
ResourceId,
                uplinkBWP
        BWP-Id
            }
```

```
        }
}


SRS-SpatialRelationInfoPos-r16 ::=     CHOICE {
    servingRS-r16                          SEQUENCE {
        servingCellId                                      ServCellIndex
OPTIONAL,    -- Need S
        referenceSignal-r16                  CHOICE {
            ssb-IndexServing-r16                 SSB-Index,
            csi-RS-IndexServing-r16              NZP-CSI-RS-ResourceId,
            srs-SpatialRelation-r16              SEQUENCE {
                resourceSelection-r16                CHOICE {
                    srs-ResourceId-r16                   SRS-ResourceId,
                    srs-PosResourceId-r16                SRS-PosResourceId-r16
```

```
                    },
          uplinkBWP-r16                              BWP-Id
              }
          }
      },
      ssb-Ncell-r16                        SSB-InfoNcell-r16,
      dl-PRS-r16                           DL-PRS-Info-r16
  }


  SRS-ResourceId ::=                                INTEGER (0..maxNrofSRS-Resources-1)
```

In Table 1, usage refers to a higher layer parameter to indicate whether the SRS resource set is used for beam management or is used for codebook based or non-codebook based transmission. 'spatialRelationInfo' is a parameter representing a configuration of spatial relation between a reference RS and a target SRS. The reference RS may be SSB, CSI-RS, or SRS which corresponds to L1 parameter 'SRS-SpatialRelationInfo'. The usage is configured per SRS resource set.

- The UE determines the Tx beam for the SRS resource to be transmitted based on SRS-SpatialRelation Info contained in the SRS-Config IE in S120. The SRS-SpatialRelation Info is configured per SRS resource and indicates whether to apply the same beam as the beam used for SSB, CSI-RS, or SRS per SRS resource. Further, SRS-SpatialRelationInfo may be configured or not configured in each SRS resource.
- If the SRS-SpatialRelationInfo is configured in the SRS resource, the same beam as the beam used for SSB, CSI-RS or SRS is applied for transmission. However, if the SRS-SpatialRelationInfo is not configured in the SRS resource, the UE randomly determines the Tx beam and transmits the SRS via the determined Tx beam in S130.
- Additionally, the UE may receive or not receive a feedback for the SRS from the BS (S140).

At least one of the operations of the UE/BS based on S110 to S140 described above may be applied in combination with the embodiments related to the Rel-18 SRS enhancement described below (e.g., at least one of Proposal 1, Proposal 2, Proposal 2-1, Proposal 2-2, Proposal 2-3, Proposal 2-4, and/or Proposal 2-5).

Hereinafter, M-TRP-related operations to which the method proposed in the present disclosure may be applied will be examined.

## Multi-Transmission/Reception Point (TRP) related operation

The BS described in the present disclosure may be a general term for an object that performs data transmission and reception with the UE. For example, the BS described in the present disclosure may be a concept including one or more transmission points (TPs), one or more transmission and reception points (TRPs), etc. For example, the multiple TPs and/or multiple TRPs described herein may be included in a single BS or may be included in multiple BSs. Further, the TP and/or TRP may include a panel of the BS, a transmission and reception unit, etc.

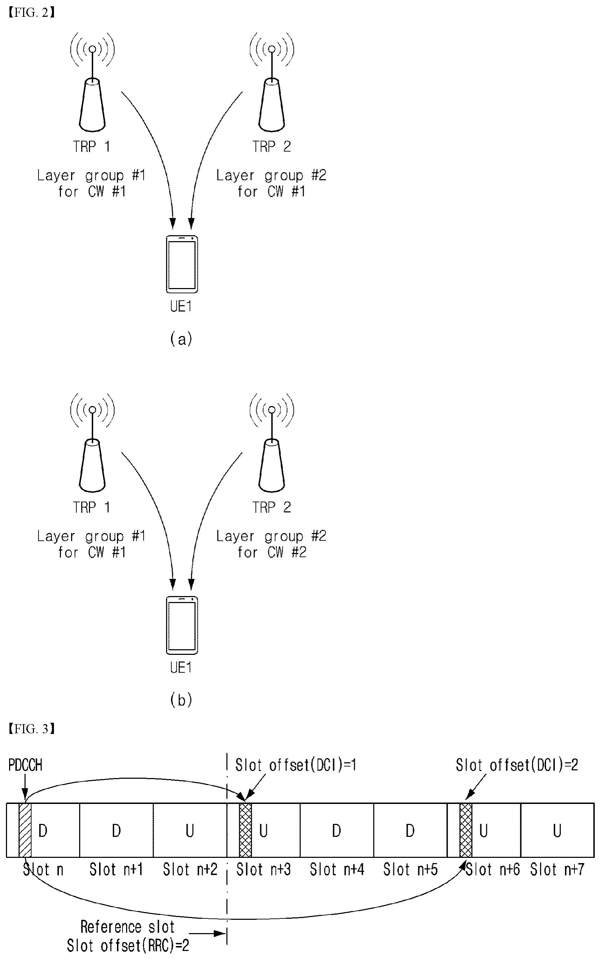

FIG. 2 illustrates an example of a transmission/reception method for improving reliability using transmission in multiple TRPs.

The example in (a) of FIG. 2 shows that a layer group transmitting the same codeword (CW)/transport block (TB) correspond to different TRPs. That is, the same CW may be transmitted through different layers/layer groups. The example in (b) of FIG. 2 shows an example in which different CWs are transmitted through layer groups corresponding to different TRPs. That is, different CWs may be transmitted through different layers/layer groups.

## <MTRP URLLC related operation>

Hereinafter, in the methods proposed in the present disclosure, DL MTRP-URLLC means that multiple TRPs transmit the same data/DCI using multiple TRPs by using different layer/time/frequency resources. UL MTRP-URLLC means that multiple TRPs receive the same data/UCI from one UE using different layer/time/frequency resources.

A case where the UE uses (maps) a specific TCI state (or TCI) when receiving data/DCI for a certain frequency/time/spatial resource may mean that the UE estimates a channel from a DMRS using a QCL type and a QCL RS indicated by the TCI state in the frequency/time/spatial resource, and receives/demodulates the data/DCI with the estimated channel.

A case where the UE uses (maps) a specific TCI state (or TCI) when receiving data/UCI for a certain frequency/time/spatial resource may mean that the UE estimates a channel from a DMRS using a Tx beam and/or Tx power indicated by the TCI state in the frequency/time/spatial resource, and transmits/modulates the DMRS and the data/UCI with the estimated channel.

The UL TCI state includes Tx beam and/or Tx power information of the UE. The UL TCI state may be directly indicated via UL grant DCI. The UL TCI state may be based on srs-UL-TCI-State (TCI-UL-StateId) configured in the SRS resource indicated through the SRI field of the UL grant DCI.

The UL TCI state may include information associated with one or more power control parameters. The one or more power control parameters may be related to at least one of i) p0, ii) alpha, iii) closed loop index, and/or iv) pathlossReferenceRS.

In the present disclosure, different TRPs may be recognized as different TCI states to the UE. A case where he UE transmits the data/UCI (or receives the data/DCI) based on TCI state 1 means that the UE transmits the data/UCI to TRP1 (or receives the data/DCI from TRP 1).

## SRS enhancement in Rel-17 MIMO

The importance of UE SRS transmission for securing UL and DL channel estimation performance in an NR TDD system has increased. Accordingly, standardization was carried out in Rel-17 MIMO with the following three goals:

First, standardization was carried out with the goal of more flexibly controlling aperiodic SRS transmission according to the DL and UL slot ratios and traffic conditions of various TDD systems.

Second, an NR UE supporting DL rank 8 transmission must be equipped with at least 8 receiving antennas, but an SRS antenna change transmission technique for estimating DL channels based on channel reciprocity in the NR TDD system only supports up to a UE with up to receiving antennas-. Therefore, Rel-17 was standardized with the goal of supporting SRS antenna change transmission techniques for a UE equipped with more than four receiving antennas.

Third, standardization was carried out for the purpose of increasing the transmission coverage of the SRS and increasing the capacity of the SRS considering simultaneous access of multiple UEs.

### More flexible aperiodic SRS transmission trigger technique

FIG. 3 is a diagram illustrating flexible aperiodic SRS transmission timing control.

In Rel-17 MIMO, two following techniques are standardized in order to more flexibly control aperiodic SRS transmission according to the DL and UL slot ratios and traffic conditions of various TDD systems.

First, a technique is introduced to dynamically control a slot offset value for an aperiodic SRS transmission trigger via the DCI. This is to solve a problem that SRS transmission may be significantly delayed depending on the DL and UL slot configurations because the existing slot offset value is fixed semi-persistently.

To this end, a new DCI field is defined that specifies one of a plurality of slot offset values set in the RRC message. In addition, the slot offset value indicated through the DCI field is standardized to be calculated based on available slots defined as slots composed of uplink slots and flexible symbols, thereby enabling flexible SRS transmission triggering with a small number of slot offset candidate values.

Second, a technique of trigger aperiodic SRS transmission without accompanying UL data transmission and CSI reporting is introduced. According to the existing scheme, in the SRS transmission, the SRS may be triggered together with the SRS through UL DCI only when PUSCH is allocated to trigger UL data and/or CSI reporting. It is difficult for the BS to estimate the UL/DL channel by triggering the SRS for the UE in a situation where there is no UL data to be transmitted and aperiodic CSI reporting is not required. This technique is intended to solve the problems described above.

SRS antenna change transmission for UE equipped with more than 4 receiving antennas

As described above, the SRS antenna change transmission technique supported in the Rel-15/16 NR system only considers the UE equipped with four receiving antennas. In Rel-17 MIMO, the SRS antenna change transmission method for UEs equipped with 6 receiving antennas and 8 receiving antennas is standardized. The extended antenna change transmission method supports the following combinations of the number of Nt transmitting antennas and the number of Nr receiving antennas.

UE with Nr = 6: Nt=1 and Nt=2, UE with Nr = 8: Nt=1, Nt=2, and Nt=4

The above SRS transmission may be transmitted within one slot, or across two or four slots.

### SRS coverage and capacity enhancement technique

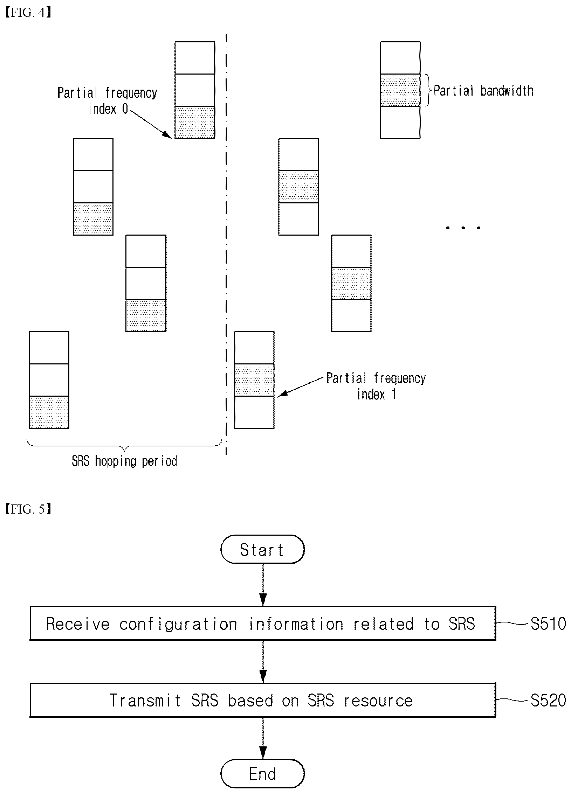

FIG. 4 is a diagram illustrating partial band SRS transmission.

In order to increase the coverage and capacity of the SRS in Rel-17 MIMO, three major techniques were introduced.

First, the maximum number of transmission repetitions of the SRS is increased so that the SRS may be used in a system requiring wider coverage. In Rel-15 and Rel-16, the SRS may be repeatedly transmitted in up to four symbols within one slot, except for positioning purposes. In Rel-17 MIMO, the SRS may be repeatedly transmitted in up to 14 symbols within the slot in order to secure wider SRS coverage. Specifically, it is possible to transmit the SRS in 8, 10, 12 or 14 consecutive symbols within the slot.

Second, the SRS may only be transmitted in a partial band. To this end, the BS may configure a resource block location and an SRS transmission band for starting SRS transmission to the UE. For SRS transmission, the frequency location may also be hopped or fixed according to set rules according to an SRS frequency hopping cycle. The introduction of this technique increased the capacity of SRS by allowing different UEs to transmit the SRS to the same BS simultaneously in different partial bands.

Last, an SRS having a lower frequency density is supported. Except for positioning in Rel-15/16, the frequency density of the supported SRS is 1 RE per 2 RE or 1 RE per 4 RE. Accordingly, stable channel estimation performance may be secured in a frequency selective channel environment, but there was a limit to securing the SRS capacity. Therefore, in Rel-17 MIMO, an additional transmission technique was introduced to transmit the SRS in 1 RE per 8 RE, thereby enabling further increase of the SRS capacity in a frequency non-selective channel environment.

Hereinafter, a SRS configuration method (considering C-JT M-TRP transmission) of the BS and a subsequent UE SRS transmission operation will be proposed.

In NR Rel-15 MIMO, the SRS may be used for a UL link adaptation usage (codebook/non-codebook), a beam management usage, and a DL CSI acquisition (antenna switching) usage. In Rel-17 FeMIMO, as described above, standardization has been carried out to support/introduce the following operations/configurations to enhance the coverage and the capacity of the SRS.

    i) Increase the number of repetitions
    ii) RPFS (RB-level Partial Frequency Sounding) configuration
    iii) comb value 8 configuration

SRS enhancement and coherent joint transmission (C-JT) scenarios are being considered to support PUSCHs based on up to 8 layers (up to 8 layer PUSCH) in Rel-18. According to the scenario, the SRS transmission frequency may increase depending on the TRP combination in the SRS for DL CSI acquisition. By considering this, an operation/configuration that enhances the SRS capacity and interference randomization is being considered.

Table 2 below illustrates the technical requirements considered for the SRS enhancement described above.

[Table 2]

| |
|---|
| 1. Study, and if justified, specify enhancements of CSI acquisition for Coherent-JT <u>targeting</u> <u>FR1</u> and up to 4 TRPs, assuming ideal backhaul and synchronization as well as the same number of antenna ports across TRPs, as follows: |
| - Rel-16/17 Type-II codebook refinement for CJT mTRP targeting FDD and its associated CSI reporting, taking into account throughput-overhead trade-off |
| - **SRS enhancement to manage inter-TRP cross-SRS interference targeting TDD CJT via SRS capacity <u>enhancement and/or interference randomization, with the constraints that 1) without consuming additional resources for SRS: 2) reuse existing SRS comb structure: 3) without new SRS root sequences</u>** |
| - Note: the maximum number of CSI-RS ports per resource remains the same as in Rel-17, i.e. 32 |
| 2. Study, and if justified, specify UL DMRS, SRS, SRI, and TPMI (including codebook) enhancements to enable 8 Tx UL operation to support 4 and more layers per UE in UL targeting CPE/FWA/vehicle/Industrial devices |
| - Note: Potential restrictions on the scope of this objective (including coherence assumption, full/non-full power modes) will be identified as part of the study. |

In particular, the present disclosure proposes a method for enhancing the SRS capacity and the inference randomization by considering the C-JT M-TRP transmission. First, the vulnerabilities/problems of the existing legacy SRS configuration are described in Problem 1 and Problem 2, and then the proposed technologies for them are described in Proposal 1 and Proposal 2.

In the present disclosure, '/' means 'and', 'or', or 'and/or' according to a context.

Problem 1: As shown in Table 2 above, there are several constraints in Rel-18 SRS enhancement, and one of the constraints is a content that additional resources for the SRS are not considered. This is to minimize the implementation complexity of the UE/BS by limiting a configuration(s) of the additional SRS resource(s) for SRS enhancement.

In addition, an antenna switching SRS configuration for a current specific UE is limited to a maximum of one SRS resource set configuration (excluding a configuration for each time domain behavior). In other words, the SRS resource set with a usage configured to antenna switching is limited to one.

Embodiments for solving the problems are described below.

Specifically, a method for perform sounding for multiple DL TRPs (for DL CSI acquisition) based on limited SRS resources is described in Proposal 1 below.

Proposal 1

For an SRS resource(s) within a specific SRS resource set, a plurality of multiple (up to 4) spatialRelationInfo/(-joint or separate UL) TCIs may be configured/indicated. The usage of the specific SRS resource set may be set to an antenna switching, a beamManagement, a codebook, or a nonCodebook.

Hereinafter, 'spatialRelationInfo/TCI' may mean a higher layer parameter spatialRelationInfo or a higher layer parameter TCI state. The spatialRelationInfo is related to a configuration of a spatial relation between a target SRS and a reference RS. The TCI state may be based on a separate TCI state (UL TCI state) or a joint TCI state. The UL TCI state may be indicated based on TCI-UL-StateId, and the joint TCI state may be indicated based on TCI-StateId.

As an example, a plurality of spatialRelationInfo parameters may be configured in the SRS resources within the specific SRS resource set, respectively.

As an example, a plurality of joint TCI states (e.g., TCI states configured based on dl-OrJointTCI-StateList within PDSCH-Config) may be configured in the SRS resources within the specific SRS resource set, respectively.

As an example, a plurality of separate TCI states (e.g., UL TCI state configured based on ul-TCI-StateList within BWPUplinkDedicated) may be configured in the SRS resources within the specific SRS resource set, respectively.

For periodic/semi-persistent SRS resource sets, the UE cyclically transmit the plurality of spatialRelationInfo/TCIs configured for each transmission instance of the SRS resource (set). Here, the cycling of spatialRelationInfo/TCI may mean that the UE performs SRS transmission while changing spatialRelationInfo/TCI. As an example, the transmission instance may be based on a periodicity related to the transmission of the SRS. The periodicity and the slot offset of SRS resources whose resourceType is semi-persistent or periodic may be set by the higher layer parameter periodicityAndOffset.

For example, the cyclic operation may be performed as follows.. It may be assumed that SRS resource #1 and SRS resource #2 are configured in SRS resource set #1 with a transmission cycle of 4 slots, and two spatialRelationInfo/TCIs are configured in each resource. The UE may transmit SRS resource #1 and SRS resource #2 based on spatialRelationInfo/TCI #1 upon transmitting SRS resource #1 and SRS resource #2 in slot #0. The UE may transmit SRS resource #2 and SRS resource #2 based on spatialRelationInfo/TCI #2 upon transmitting SRS resource #1 and SRS resource #2 in slot #4.

Here, SRS resource transmission or SRS resource set transmission may mean that SRS is transmitted on an SRS resource of an SRS resource or an SRS resource set.

A cyclic order of the spatialRelationInfo/TCI per SRS transmission instance may follow an order configured in each resource (set). Even in the case of the aperiodic SRS resource set, the UE may perform sounding for the plurality of TRPs (cyclically for each trigger/transmission instance) in the same scheme as P/SP (periodic SRS/semi-persistent SRS).

For example, cycling of the spatialRelationInfo/TCI may be performed for each instance in which the corresponding SRS resource set is triggered and transmitted via the DCI.

As another example, for the corresponding AP SRS resource set (i.e., the SRS resource set configured to aperiodic), a cyclic operation based on the following i) or ii) may be performed.

i) The UE may transmit the SRS by cycling the spatialRelationInfo/TCI in consecutive (available UL) slots equal to the number of spatialRelationInfo/TCI set in the SRS resource(s) within the SRS resource set (or/and N (natural number) times the corresponding number) from the slot offset configured in the SRS resource set. The slot offset may mean an offset in number of slots between the triggering DCI and the actual transmission of this SRS-ResourceSet.

As an example, the UE may receive a DCI that triggers the SRS in slot n. The slot offset set in the SRS resource set related to the SRS may be k (e.g., 1 to 32). Two spatialRelationInfo/TCIs may be configured in two SRS resources in the SRS resource set, respectively. The UE may transmit the SRS by cycling two spatialRelationInfo/TCIs in consecutive UL slots including slot n + k as a first slot.

ii) (In addition to the slot offset set in the SRS resource set), the number of repeated transmissions and/or a transmission periodicity (e.g., X slot) may be set for the SRS resources in the SRS resource set. When the corresponding AP SRS resource set is triggered, the corresponding SRS resource set may be transmitted in a plurality of slots by cycling the spatialRelationInfo/TCI.

The number of repeated transmissions in Method ii above may be N times the number of spatialRelationInfo/TCIs set/indicated (N is a natural number). As yet another (or equivalent) example, different TRP IDs or different spatialRelationInfo/TCIs corresponding thereto may be configured to be implicitly connected/associated for each slot in advance. For example, slots 4n/4n+1/4n+2/4n+3 may be connected to/associated with TRP #0/1/2/3, respectively. When the AP SRS transmission triggering DCI is received, the UE may determine the SRS transmission slot by applying the slot offset (indicated through the DCI or set in the AP SRS resource set) based on the time of receiving the DCI. The UE may operate to generate/transmit the SRS based on the TRP ID connected to the corresponding SRS transmission slot or spatialRelationInfo/TCI corresponding thereto.

Or/and, the BS may use a separate field (up to 2 bits) of SRS triggering DL/UL DCI to indicate the spatialRelationInfo/TCI for SRS transmission. Specifically, based on the field, it may be indicated which of the multiple (up to 4) spatialRelationInfo/TCIs configured for each SRS resource are to be utilized for aperiodic SRS (resource set) transmission. As a specific example, the spatialRelationInfo/TCI to be used may be determined based on a value (codepoint) of the field. In the case of codepoint = "00", a first spatialRelationInfo/TCI set for the SRS resource(s) configured in the SRS resource set may be utilized for the SRS transmission. In the case of codepoint = "10", a second spatialRelationInfo/TCI set for the SRS resource(s) configured in the SRS resource set may be utilized for the SRS transmission.

In addition, an operation to trigger a plurality of SRS transmissions by indicating the plurality of spatialRelationInfo/TCIs through DL/UL grant DCI.

For example, when scheduling an M-TRP repetition PUSCH with the UL grant DCI, two SRIs may be indicated through two SRI fields. By enhancing this, the following operation may be performed. Two SRS resources (or/and two SRS resource sets to which two SRS resources belong) based on two SRIs indicated above may be triggered.

When two SRS resources (or/and two SRS resource sets to which two SRS resources belong) are triggered and transmitted, two spatialRelationInfo/TCIs based on the indicated two SRIs may be utilized for the transmission. In this case, when two SRIs are indicated through the DCI, a separate 1-bit field may exist within the DCI to indicate whether to trigger the indicated two SRS resources (sets). (Among the two SRS resource sets based on the two SRS resources indicated) the slot offset for each SRS resource set may also be set/indicated in advance.

As another example, an M-TRP PUSCH may be scheduled through the UL grant DCI that schedules an M-TRP repetition PUSCH, and an SRS resource set(s) of an M-TRP target may be triggered through an SRS request field in the DCI. At this time, the value (codepoint) of the SRS request field may be set to a value (codepoint) in which a plurality of SRS resource sets are connected/mapped.

In particular, in this case, as in the first example above, sounding may be performed when transmitting SRS resource set(s) by utilizing the two spatialRelationInfo/TCIs utilized in the two SRI indications as they are. Specifically, the following operation may be performed based on two SRS resource sets indicated based on the codepoint of the SRS request field. The UE may utilize a transmission beam (e.g., UL TX spatial filter) corresponding to the first SRI for a first SRS resource set, and the transmission beam corresponding to the second SRI for a second SRS resource set.

As another example, a dynamic update may be performed for a plurality of TCI state(s) for the M-TRP by utilizing the DL grant/non-grant DCI. At this time, the UE may apply a plurality of TCIs indicated by the DCI to the SRS resource set(s) of the M-TRP target for which a trigger is indicated in the SRS request field. Specifically, the following operation may be performed based on two SRS resource sets indicated based on the codepoint of the SRS request field. The UE may utilize a transmission beam (e.g., UL TX spatial filter) corresponding to the first TCI for a first SRS resource set, and the transmission beam corresponding to the second TCI for a second SRS resource set.

The operation of Proposal 1 may be applied in relation to the above-described operation. Specifically, based on the fact that a plurality of spatialRelationInfo/TCIs are indicated and that there is one target SRS resource set that is triggered, the following operation may be performed. The UE may transmit the SRS by cycling the plurality of spatialRelationInfo/TCIs for the SRS resource(s) within the corresponding SRS resource set as in Proposal 1.

Through the operation of Proposal 1, sounding for a plurality of TRPs (for DL CSI acquisition) may be performed using a single SRS resource set without an additional SRS resource configuration in a combination of the plurality of TRPs for a M-TRP (C-JT) DL transmission.

In addition, just as the plurality of spatialRelationInfo/TCIs are configured for each SRS resource in the SRS resource set, a plurality of SRS power control parameter sets may be configured as many as the number of spatialRelationInfo/TCIs in the SRS resource set.

The UE may apply the spatialRelationInfo/TCI cycling operation based on Proposal 1 above to the plurality of SRS power control parameter sets configured in the SRS resource set. Specifically, the UE may transmit the SRS by determining a transmission power by cycling the plurality of SRS power control parameter sets for each transmission instance of the SRS resource set.

A cyclic order of the plurality of power control parameter sets may follow an order configured in the SRS resource set.

When the UE supports a Rel-17 unified TCI configured/associated with power control parameters, the cycling of the power control parameter sets may be performed as follows. Since the power control parameter set is set in a plurality of TCI states (joint or separate UL) that are configured in the SRS resource(s) within the corresponding SRS resource set, the power control parameter set may be cycled simultaneously with the TCI cycling.

Hereinafter, an MAC CE format related to the above-described embodiment will be examined.

Specifically, when the plurality of spatialRelationInfo/TCIs are configured in the SRS resource(s) in the SRS resource set as described above, a MAC CE format for dynamically updating/activating the plurality of spatialRelationInfo/TCIs is proposed.

The MAC CE format may include a plurality of spatialRelationInfo/TCIs for each SRS resource for the target SRS resource set. As an example, the MAC CE format may include at least one field representing/indicating the plurality of spatialRelationInfo/TCIs for each SRS resource of the target SRS resource set.

When the SRS resource set is a resource set of a periodic component (i.e., an SRS resource set with resource Type set to periodic), it is impossible to update/activate the spatialRelationInfo/TCI set based on an RRC signaling via the MAC CE. In this regard, the following embodiment may be considered.

For the SRS resource(s) within the SRS resource set of the periodic component, the spatialRelationInfo/TCI for the cyclic transmission may be configured based on the RRC signaling. Specifically, a plurality of reference RS candidates of the spatialRelationInfo/TCI may be configured for each SRS resource. As an example, when up to 4 TRPs are considered, the spatialRelationInfo/TCI for each SRS resource may be configured as follows.

1) A plurality of candidates related to a first spatialRelationInfo/TCI
2) A plurality of candidates related to a second spatialRelationInfo/TCI
3) A plurality of candidates related to a third spatialRelationInfo/TCI
4) A plurality of candidates related to a fourth spatialRelationInfo/TCI

spatialRelationInfo/TCIs based on the plurality of candidates may be related to different reference RSs.

Hereinafter, the operation based on the embodiment described below will be more specifically described.

One of the configured candidate spatialRelationInfo/TCIs may be indicated based on the enhanced SRS spatialRelationInfo/TCI update/activation MAC CE (format). Specifically, one of the candidate spatialRelationInfo/TCIs (for the first to fourth spatialRelationInfo/TCIs in the cyclic transmission) configured by RRC may be indicated for the spatialRelationInfo/TCI update/activation for the SRS resource set of the periodic component. When it is assumed that even a second spatialRelationInfo/TCI is indicated, the spatialRelationInfo/TCI may be indicated as follows. Based on the MAC CE, i) one of the plurality of candidates related to the first spatialRelationInfo/TCI and one of the plurality of candidates related to the second spatialRelationInfo/TCI may be indicated.

As described above, based on the MAC CE , the UE may perform the update/activation for the corresponding P-SRS.

When a plurality of candidate spatialRelationInfo/TCIs (for the first to fourth spatialRelationInfo/TCIs in the cyclic transmission) are configured for the SRS resource set, the following problem may occur in the UE operation. When the P-SRS transmission is performed before the first MAC CE is indicated, there is an ambiguity in the UE operation as to which spatialRelationInfo/TCI among the plurality of candidates should be utilized for the corresponding SRS transmission. In order to solve the problem, the following embodiment may be considered.

The UE use the first spatialRelationInfo/TCI or/and the reference RS and/or TCI state with a lowest ID for the corresponding SRS transmission. A case where two spatialRelationInfo/TCIs are utilized is assumed and described.

As an example, i) a spatialRelationInfo/TCI associated with the reference RS having the lowest ID among the plurality of candidates related to the first spatialRelationInfo/TCI, and ii) a spatialRelationInfo/TCI associated with the reference RS having the lowest ID among the plurality of candidates related to the second spatialRelationInfo/TCI may be utilized for the SRS transmission.

As an example, i) a spatialRelationInfo/TCI having the lowest ID among the plurality of candidates related to the first spatialRelationInfo/TCI, and ii) a spatialRelationInfo/TCI having the lowest ID among the plurality of candidates related to the second spatialRelationInfo/TCI may be utilized for the SRS transmission. The spatialRelationInfo/TCI having the lowest ID may be a TCI state having the lowest ID (i.e., the lowest tci-StateId) or a first spatialRelationInfo among the plurality of candidates.

An MAC CE format for updating/activating a plurality of power control parameter sets may be utilized for a specific SRS resource set.

When the BS configures/indicated to change the spatialRelationInfo/TCI for the SRS resource(s) within the specific SRS resource set, the UE may change the spatialRelationInfo/TCI starting from 3 msec after transmitting an ACK for the change configuration/indication (e.g., MAC-CE). Such an operation reduces the ambiguity for the time of changing the spatialRelationInfo/TCI and allows the UE to perform the change operation through a clear timeline.

When the spatialRelationInfo/TCI is changed for the SRS resource(s) in the SRS resource set, the UE may perform the sounding while cycling starting from the first spatialRelationInfo/TCI set after the timeline (e.g., first -> second -> third -> fourth -> first...).

Additionally, considering a situation where a main serving TRP exists, a method may be considered in which, instead of cycling the plurality of spatialRelationInfo/TCIs at the same rate for each SRS resource in the SRS resource set, an additional frequency is assigned to a main (mostly used) target serving TRP and cycled. For example, when four spatialRelationInfo/TCIs are cycled in the same ratio (1:1:1:1), each spatialRelationInfo/TCI may be used and changed only once. However, according to the embodiment, the spatialRelationInfo/TCI may be cycled based on a ratio (e.g., 2:2:1:1) with different frequencies for each spatialRelationInfo/TCI. In this case, according to the ratio (e.g. 2:2:1:1), a specific spatialRelationInfo/TCI may be used twice and then changed to another spatialRelationInfo/TCI.

Or/and, when there is a TRP with an insufficient coverage, a method may be considered in which a symbol count/repetition factor of the SRS resource(s) within the corresponding SRS resource set (for the TRP with the insufficient coverage) is increased for each target TRP (for each Tx instance). That is, when transmitting SRS resource(s) within the SRS resource set with a specific spatialRelationInfo/TCI, the UE may perform the sounding (transmit the SRS) based on a value (e.g., 2 or 4) greater than the set symbol number/repetition factor (e.g., 1 or 2).

Problem 2: For SRS interference randomization between TRPs, dispersion in time/frequency/code domain is required in a multi-UE/TRP SRS configuration. As shown in Table 2 above, there are constraints in Rel-18 SRS enhancement, such as having to use an existing SRS comb structure as it is or not introducing a new SRS root sequence. As a result, slot/symbol-level comb value hopping, cyclic shift hopping, and introduction of an additional frequency hopping pattern are being discussed in a standardization meeting.

In Proposal 2, a method for configuring/indicating TRP specific sequence (group) hopping, frequency hopping pattern, comb value hopping pattern, and cyclic shift hopping pattern is proposed.

Proposal 2

The BS may, for SRS transmission of the UE (for an antenna switching usage), differently configure/indicate at least one of the following 1) to 8) for SRSs having different desired/target TRPs.

1) sequence initialization factor
2) sequence (group) hopping pattern
3) frequency hopping pattern
4) RB-level Partial Frequency Sounding (RPFS) pattern
5) comb value
6) comb value hopping pattern
7) cyclic shift
8) cyclic shift hopping pattern

The SRSs having different desired/target TRPs as mentioned above may be SRSs in which different UL spatialRelationInfo/TCIs are configured/indicated for a specific SRS and/or a plurality of SRSs.

For example, as in Proposal 1 above, it may be assumed that the plurality of spatialRelationInfo/TCIs are configured for each SRS resource in the specific SRS resource set. At this time, different SRS transmission instances transmitted based on different spatialRelationInfo/TCI (i.e., SRSs based on different SRS transmission instances) may be SRSs heading to different TRPs.

That is, in Proposal 1, at least one of 1) the sequence initialization factor, 2) the sequence (group) hopping pattern, 3) the frequency hopping pattern, 4) the RPFS pattern, 5) the comb value, 6) the comb value hopping pattern, 7) the cyclic shift, and/or 8) the cyclic shift hopping pattern may be differently configured/indicated for each different SRS transmission instance.

Or/and, when a targetTRP (id) is explicitly configured for the SRS resource (set), SRS resources (sets) in which different target TRP (ids) are configured may be SRSs with different desired/target TRPs.

Proposal 2-1

Hereinafter, a method for configuring/indicating a TRP-specific sequence initialization factor or/and a TRP-specific sequence (group) hopping pattern for each SRS will be examined.

As shown in Table 3 below, in the NR SRS configuration, a sequence group u and a sequence number v are determined by a groupOrSequenceHopping parameter. The SRS sequence initialization factor as $n_{\text{ID}}^{\text{SRS}}$ (sequenceId), and the corresponding value may be set for each SRS resource. For a specific SRS resource, whether sequence group hopping and sequence hopping are performed are determined based on on/off of u and v. The SRS sequence determined by the sequenceId configured in the corresponding SRS resource may vary for each slot/symbol index.

[Table 3]

The sequence group $u = (f_{gh}(n_{s,f}^{\mu}, l') + n_{ID}^{SRS}) \bmod 30$ and the sequence number *v* in clause 5.2.2 depends on the higher-layer parameter *groupOrSequenceHopping* in the *SRS-Resource* IE or the *SRS-PosResource* IE. The SRS sequence identity $n_{ID}^{SRS}$ is given by the higher layer parameter *sequenceId* in the *SRS-Resource* IE, in which case $n_{ID}^{SRS} \in \{0,1,...,1023\}$, or the *SRS-PosResource-r16* IE, in which case $n_{ID}^{SRS} \in \{0,1,...,65535\}$. The quantity $l' \in \{0,1,...,N_{symb}^{SRS} - 1\}$ is the OFDM symbol number within the SRS resource.

- if *groupOrSequenceHopping* equals 'neither', neither group, nor sequence hopping shall be used and

$$f_{gh}\left(n_{s,f}^{\mu}, l'\right) = 0$$
$$v = 0$$

- if *groupOrSequenceHopping* equals 'groupHopping', group hopping but not sequence hopping shall be used and

$$f_{gh}\left(n_{s,f}^{\mu}, l'\right) = \left(\sum_{m=0}^{7} c\left(8\left(n_{s,f}^{\mu} N_{symb}^{slot} + l_0 + l'\right) + m\right) \cdot 2^m\right) \bmod 30$$
$$v = 0$$

where the pseudo-random sequence *c*(*i*) is defined by clause 5.2.1 and shall be initialized with $c_{init} = n_{ID}^{SRS}$ at the beginning of each radio frame.

- if *groupOrSequenceHopping* equals 'sequenceHopping', sequence hopping but not group hopping shall be used and

$$f_{gh}\left(n_{s,f}^{\mu}, l'\right) = 0$$

$$v = \begin{cases} c\left(n_{s,f}^{\mu} N_{symb}^{slot} + l_0 + l'\right) & M_{sc,b}^{SRS} \geq 6N_{sc}^{RB} \\ 0 & \text{otherwise} \end{cases}$$

where the pseudo-random sequence *c*(*i*) is defined by clause 5.2.1 and shall be initialized with $c_{init} = n_{ID}^{SRS}$ at the beginning of each radio frame.

According to Proposal 2-1, different sequence initialization factors or/and sequence (group) hopping patterns may be configured/indicated for SRS resources (sets) with different desired/target TRPs.

For the sequence group index u, a value of u may be set to vary between different SRSs with different desired/target TRPs based on the following i) and/or ii).

i) A $n_{ID}^{SRS}$ (sequenceId) value shown in Equation 1 below is set (differently) for each desired/target TRP

ii) $n_{ID}^{SRS}$ is configured only in TRP#0 (e.g., first SRS resource (set) transmission and/or the first SRS transmission instance in Proposal), and $n_{ID}^{SRS}$ is configured differently for each TRP by adding TRP ID (e.g., a $n_{ID}^{SRS}$ offset value between different desired/target TRPs and/or a $n_{ID}^{SRS}$ offset value for each SRS transmission instance in Proposal 1) to the corresponding $n_{ID}^{SRS}$

[Equation 1]

$$u = \left(f_{gh}(n_{s,f}^{\mu}, l') + n_{ID}^{SRS}\right) \bmod 30$$

**SRS**

According to an embodiment, the u value may be varied between different SRSs having different desired/target TRPs by modifying/applying Equation 2 below.

Equation 2 may be a modular calculation formula for determining an existing $f_{gh}(n_{s,f}^{\mu}, l')$ value, and may be expressed as $f_{gh}\left(n_{s,f}^{\mu}, l'\right) = (X) \bmod 30$. According to the embodiment, in the multi-TRP based SRS transmission situation, Equation 2 may be applied in a modified form such as a form of $f_{gh}\left(n_{s,f}^{\mu}, l'\right) = (X + \text{TRP-specific offset value}) \bmod 30$ and/or a form of $f_{gh}\left(n_{s,f}^{\mu}, l'\right) = (X) \bmod 30 + \text{TRP-specific offset value}$. In this case, the TRP-specific offset value may mean an offset value that is set individually/independently for each TRP ID (e.g., for each SRS where different UL spatialRelationInfo/TCIs are configured/indicated). This allows the u values to vary between different SRSs with different desired/target TRPs.

[Equation 2]

$$f_{gh}\left(n_{s,f}^{\mu}, l'\right) = \left(\sum_{m=0}^{7} c\left(8\left(n_{s,f}^{\mu} N_{symb}^{slot} + l_0 + l'\right) + m\right)\cdot 2^{m}\right) \bmod 30$$

Through the operation of Proposal 2-1 above, the sequenceId value may be set differently or the sequence (group) hopping pattern may be configured differently for the SRSs heading to different TRPs. This allows an interference randomization effect to be achieved through a collision between orthogonal (or quasi-orthogonal) sequences when a plurality of SRSs (from a plurality of UEs) heading to different TRPs collide in a time/frequency domain.

Proposal 2-2

Hereinafter, a method for configuring/indicating the TRP-specific frequency hopping pattern for each SRS will be examined.

As in Table 4 below, in the NR SRS configuration, when $b_{hop}$ configured in the higher layer is equal to or larger than $B_{SRS}$, the frequency hopping is disabled, so a frequency domain index $n_b$ value is fixed, and when $b_{hop}$ is smaller than $B_{SRS}$, the frequency hopping is enabled, so the frequency domain index $n_b$ value is hopped according to an increase of an SRS counter $n_{SRS}$.

[Table 4]

Frequency hopping of the sounding reference signal is configured by the parameter $b_{hop} \in \{0,1,2,3\}$, given by the field *b-hop* contained in the higher-layer parameter *freqHopping* if configured, otherwise $b_{hop} = 0$.

If $b_{hop} \geq B_{SRS}$, frequency hopping is disabled and the frequency position index $n_b$ remains constant (unless reconfigured) and is defined by

$$n_b = \left\lfloor 4n_{RRC}/m_{SRS,b} \right\rfloor \bmod N_b$$

for all $N_{symb}^{SRS}$ OFDM symbols of the SRS resource. The quantity $n_{RRC}$ is given by the higher-layer parameter *freqDomainPosition* if configured, otherwise $n_{RRC} = 0$, and the values of $m_{SRS,b}$ and $N_b$ for $b = B_{SRS}$ are given by the selected row of Table 6.4.1.4.3-1 corresponding to the configured value of $C_{SRS}$.

If $b_{hop} < B_{SRS}$, frequency hopping is enabled and the frequency position indices $n_b$ are defined by

$$n_b = \begin{cases} \left\lfloor 4n_{RRC}/m_{SRS,b} \right\rfloor \bmod N_b & b \leq b_{hop} \\ \left(F_b(n_{SRS}) + \left\lfloor 4n_{RRC}/m_{SRS,b} \right\rfloor\right) \bmod N_b & \text{otherwise} \end{cases}$$

where $N_b$ is given by Table 6.4.1.4.3-1,

$$F_b(n_{SRS}) = \begin{cases} (N_b/2) \dfrac{n_{SRS} \bmod \Pi_{b'=b_{hop}}^{b} N_{b'}}{\Pi_{b'=b_{hop}}^{b-1} N_{b'}} + \dfrac{n_{SRS} \bmod \Pi_{b'=b_{hop}}^{b} N_{b'}}{2\Pi_{b'=b_{hop}}^{b-1} N_{b'}} & \text{if } N_b \text{ even} \\ \left\lfloor N_b/2 \right\rfloor \left\lfloor n_{SRS}/\Pi_{b'=b_{hop}}^{b-1} N_{b'} \right\rfloor & \text{if } N_b \text{ odd} \end{cases}$$

and where $N_{b_{hop}} = 1$ regardless of the value of $N_b$. The quantity $n_{SRS}$ counts the number of SRS transmissions. For the case of an SRS resource configured as aperiodic by the higher-layer parameter *resourceType*, it is given by

$n_{SRS} = \left\lfloor l'/R \right\rfloor$ within the slot in which the $N_{symb}^{SRS}$ symbol

SRS resource is transmitted. The quantity $R \leq N_{\text{symb}}^{\text{SRS}}$ is the repetition factor given by the field *repetitionFactor* if configured, otherwise $R = N_{\text{symb'}}^{\text{SRS}}$.

For the case of an SRS resource configured as periodic or semi-persistent by the higher-layer parameter *resourceType,* the SRS counter is given by

$$n_{\text{SRS}} = \left( \frac{N_{\text{slot}}^{\text{frame},\mu} n_{\text{f}} + n_{\text{s,f}}^{\mu} - T_{\text{offset}}}{T_{\text{SRS}}} \right) \cdot \left( \frac{N_{\text{symb}}^{\text{SRS}}}{R} \right) + \left\lfloor \frac{l'}{R} \right\rfloor$$

for slots that satisfy $\left( N_{\text{slot}}^{\text{frame},\mu} n_{\text{f}} + n_{\text{s,f}}^{\mu} - T_{\text{offset}} \right) \bmod T_{\text{SRS}} = 0$. The periodicity $T_{\text{SRS}}$ in slots and slot offset $T_{\text{offset}}$ are given in clause 6.4.1.4.4.

According to Proposal 2-2, different frequency hopping patterns may be configured/indicated by setting different $b_{\text{hop}}$ values for the SRS resources (sets) with different desired/target TRPs.

In the case where the UE transmits the plurality of spatialRelationInfo/TCIs in the cyclic manner by utilizing the specific SRS resource (set) based on Proposal 1, the following configuration may be applied.

By setting different $b_{\text{hop}}$ values for each SRS transmission instance with different spatialRelationInfo/TCIs, different frequency hopping patterns may be configured/indicated for each SRS transmission instance.

The embodiment proposes an operation in which the $b_{\text{hop}}$ value varies dependently on cycled/changed spatialRelationInfo/TCI in the specific SRS resource (set).

Through the operation of Proposal 2-2 above, the frequency hopping pattern value may be configured differently for the SRSs heading to different TRPs. Through this, when the plurality of SRSs (from the plurality of UEs) heading to different TRPs collide in the time/frequency domain, the SRSs sound different hopping bands or have different hopping patterns, so the interference randomization effect may be achieved.

Proposal 2-3

Hereinafter, a method for configuring/indicating TRP-specific RB-level Partial Frequency Sounding (RPFS) startRBIndex and/or EnableStartRBHopping for each SRS will be examined.

In order to enhance an SRS coverage/capacity in Rel-17 SRS enhancement, standardization is carried out to sound 1/2 or 1/4 of the SRS bandwidth configured for a situation in which the frequency hopping is enabled/disabled. The following configuration/operation may be performed in relation to utilization of a partial band of the SRS bandwidth.

A value of $P_{\text{F}} \in \{2, 4\}$ may be set, and startRBIndex for configuring for which partial band among $P_{\text{F}}$ partial bands corresponding to perform sounding may be configured. For example, startRBIndexAndFreqScalingFactor2 or startRBIndexAndFreqScalingFactor4 may be configured based on partialFreqSounding. start RB index may be configured in which the frequency scaling factor (the $P_{\text{F}}$) is 2 based on startRBIndexAndFreqScalingFactor2. start RB index may be configured in which the frequency scaling factor (the $P_{\text{F}}$) is 4 based on startRBIndexAndFreqScalingFactor4.

EnableStartRBHopping for determining whether to perform hopping may be configured in $P_{\text{F}}$ partial bands. For example, enableStartRBHopping may be set to enable.

For example, Start RB hopping may be performed as follows.

When $P_{\text{F}} = 2$, hopping may be performed in a form of 0, 1, 0, 1 ... with respect to startRBIndex. The startRBIndex may be set to 0 or 1 (e.g., the startRBIndexAndFreqScalingFactor2 is set to 0 or 1).

When $P_{\text{F}} = 4$, the hopping may be performed in a form of 0, 2, 1, 3, 0, 2, 1, 3 ... with respect to startRBIndex. The startRBIndex may be set to 0, 1, 2, or 3 (e.g., the startRBIndexAndFreqScalingFactor4 is set to 0, 1, 2, or 3).

According to Proposal 2-3, different startRBIndex and/or EnableStartRBHopping may be configured/indicated for SRS resources (sets) with different desired/target TRPs. This allows different partial bands to be sounded or different start RB hopping patterns to be configured/indicated.

Specifically, different start RB hopping patterns may be configured/indicated even if the $P_{\text{F}}$ value is the same for SRS resources (sets) with different desired/target TRPs (e.g., SRS #1 = "0, 2, 1, 3, 0, 2, 1, 3 ..", SRS #2 = "2, 1, 3, 0, 2, 1, 3, 0 ..", and SRS #3 = "0, 1, 2, 3, 0, 1, 2, 3 ..".).

In the case where the UE transmits the SRS by cycling the plurality of spatialRelationInfo/TCIs by utilizing the specific SRS resource (set) based on Proposal 1, the following configuration may be applied.

Different startRBIndex values may be configured/indicated or different frequency hopping patterns may be configured/indicated for each SRS transmission instance with different spatialRelationInfo/TCIs. This allows different partial bands to be sounded or different start RB hopping patterns to be configured/indicated for each SRS transmission instance.

The embodiment proposes an operation in which the startRBIndex and/or start RB hopping pattern varies dependently on cycled/changed spatialRelationInfo/TCI in the specific SRS resource (set).

Through the operation of Proposal 2-3, the start RB hopping pattern may be configured differently (in the RPFS) for the SRSs heading to different TRPs. Through this, when the plurality of SRSs (from the plurality of UEs) heading to different TRPs collide in the time/frequency domain, the SRSs sound different partial bands or have different start RB hopping patterns, so the interference randomization effect may be achieved.

Proposal 2-4

Hereinafter, a method for configuring/indicating the TRP-specific comb value and/or comb value hopping pattern for each SRS will be examined.

According to Proposal 2-4, different comb value offset and/or comb offset value hopping pattern may be configured/indicated for SRS resources (sets) with different desired/target TRPs. The method for configuring/indicating different comb offset values and/or different comb offset value hopping patterns will be specifically described below.

As an example, even though comb values of the SRS resources (sets) having different desired/target TRPs are the same as each other, different comb offsets may be configured/indicated in each SRS resource (set).

As an example, when the comb offset hopping and/or the comb value hopping are/is supported in the SRS, the following configuration/operation may be performed. Different comb offset hopping patterns and/or comb value hopping patterns may be configured/indicated in the SRS resources (sets) with different desired/target TRPs.

For example, when a set comb value is 4, different comb offsets 0 and 3 may be configured/indicated for the SRS resources (sets) with different desired/target TRPs.

For example, when hopping the comb offset value is supported according to an increase in SRS counter $n_{SRS}$ or/and an increase in number of slots/symbols, the following configuration/operation may be performed. For SRS resources (sets) with different desired/target TRPs (even if the initial comb offset values are the same), different hopping patterns may be configured/indicated like "comb offset = 0, 2, 3, 1, 0, 2, 3, 1..." and "comb offset = 0, 1, 2, 3, 0, 1, 2, 3 ...".

In the case where the UE transmits the SRS by cycling the plurality of spatialRelationInfo/TCIs by utilizing the specific SRS resource (set) based on Proposal 1, the following configuration may be applied.

Different comb offset values may be configured/indicated or different comb offset hopping patterns may be configured/indicated for each SRS transmission instance with different spatialRelationInfo/TCIs. This allows different frequency resources to be sounded or different comb offset hopping patterns to be configured/indicated for each SRS transmission instance.

The embodiment proposes an operation in which the comb offset and/or comb offset hopping pattern varies dependently on cycled/changed spatialRelationInfo/TCI in the specific SRS resource (set).

Through the operation of Proposal 2-4 above, the comb offset and/or comb offset hopping pattern may be configured differently for the SRSs heading to different TRPs. Through this, when the plurality of SRSs (from the plurality of UEs) heading to different TRPs collide in the time/frequency domain, the SRSs sound different frequency resources or have different comb offset hopping patterns, so the interference randomization effect may be achieved.

Proposal 2-5

Hereinafter, a method for configuring/indicating a TRP-specific CS value and/or CS value hopping pattern for each SRS will be examined.

According to Proposal 2-5, different CS values and/or CS value hopping patterns may be configured/indicated for SRS resources (sets) with different desired/target TRPs. A method for configuring/indicating different CS values and/or different CS value hopping patterns will be specifically described below.

First, by citing a PUCCH CS hopping equation, the method is described. In Equation 3 below, $m_0$ may be interpreted as a CS value set in the SRS resource.

According to Proposal 2-5, the CS value may be set to vary between different SRSs with different desired/target TRPs based on the following i) and/or ii).

i) The $m_0$ value is set differently for each desired/target TRP.

ii) $m_0$ is configured only in TRP#0 (e.g., first SRS resource (set) transmission and/or the first SRS transmission instance in Proposal), and $m_0$ is configured differently for each TRP by adding TRP ID (e.g., a CS offset value between different desired/target TRPs and/or a CS offset value for each SRS transmission instance in Proposal 1) to the corresponding $m_0$.

[Equation 3]

$$\alpha_l = \frac{2\pi}{N_{sc}^{RB}}\left(\left(m_0 + n_{cs}\left(n_{s,f}^{\mu}, l + l'\right)\right) \bmod N_{sc}^{RB}\right)$$

According to an embodiment, the CS value may be varied between different SRSs having different desired/target TRPs by modifying/applying Equation 4 below.

Equation 4 may be a calculation formula for determining the $n_{cs}\left(n_{s,f}^{\mu}, l\right)$ value, and may be expressed as $n_{cs}\left(n_{s,f}^{\mu}, l\right) = $ X.

According to the embodiment, Equation 4 may be applied to a modified form such as $n_{cs}\left(n_{s,f}^{\mu}, l\right) = $ X + TRP-specific CS offset value. In this case, the TRP-specific CS offset value may mean an offset value that is set individually/independently for each TRP ID (e.g., for each SRS where different UL spatialRelationInfo/TCIs are configured/indicated). Such an operation allows the CS values to vary between different SRSs with different desired/target TRPs.

[Equation 4]

$$n_{cs}\left(n_{s,f}^{\mu}, l\right) = \sum_{m=0}^{7} 2^m\, c\left(8 N_{symb}^{slot} n_{s,f}^{\mu} + 8l + m\right)$$

In Equation 3 above, a constant related to the number of subcarriers ($N_{sc}^{RB}$) within 1 RB in Equation 3 above is enabled to be modified in the equation according to the comb value set in the SRS. In the case of a constant related to a max CS value in Equation 5 above, a max CS value to be applied may be different depending on the comb value set in the SRS. It is apparent that the equation based on Proposal 2-5 described above does not limit a technical idea according to the present disclosure, and that modification of the equation may also be included in the technical idea according to the present disclosure.

Through the operation of Proposal 2-5 above, the CS value may be configured differently or the CS hopping pattern may be configured differently for the SRSs heading to different TRPs. This allows the interference randomization effect to be achieved through a collision between orthogonal (or quasi-orthogonal) sequences when the plurality of SRSs (from a plurality of UEs) heading to different TRPs collide in the time/frequency domain.

In Proposal 2 above, when the SRS is to be transmitted at an additional frequency for the main (mostly used) target serving TRP, the following methods may be considered. A sequence group/CS hopping distance between two TRPs may be increased to the maximum by preferentially considering a reduction between SRS resources (sets) heading to the main target serving TRPs (TRP#0 and TRP#1), and cases including other TRP#2 and TRP##3 may be considered secondarily.

Specifically, the orthogonality may be increased by setting/indicating the sequence group/CS hopping distance to the maximum for the SRSs heading to the main TRP, and the interference between the main TRPs may be reduced by positioning the sequence group and/or CS value of SRSs heading to the remaining TRPs between the distances.

Hereinafter, methods for SRS interference randomization will be described.

In Rel-18 MIMO, SRS interference may increase with an increase of C-JT TRP in SRS transmission for C-JT (for DL CSI acquisition), and thus new technology introduction for the SRS interference randomization is discussed. Referring to an agreement below, cyclic shift (CS) hopping or/and comb offset hopping can be introduced for SRS interference (for antenna switching) randomization, and a specific hopping pattern or hopping unit needs to be further studied.

[Table 5]

| Agreement |
|---|
| Support at least one of the following for SRS interference randomization<br><br>    • Randomized code-domain resource mapping for SRS transmission by introducing cyclic shift hopping / randomization to SRS resource<br>    • Comb offset hopping for SRS<br>        o The comb offset is determined pseudo-randomly as a function of time (e.g., slot index, symbol index) and/or NW configured ID with a certain UE-specific initialization.<br>        o FFS: Other details, e.g., how the comb offset value is determined by the parameters for each SRS port of a SRS resource for a SRS transmission occasion. |

(continued)

| Agreement |
|---|
| For SRS interference randomization, support one from the following options (to be decided in RAN1#112):<br>• Opt. 1: Cyclic shift hopping |
| • Opt. 2: Comb offset hopping<br>• Opt. 3: Both cyclic shift hopping and comb offset hopping<br>      o FFS: details including whether to support separate and/or combined hopping<br>      o FFS: details on UE capability and signaling |

| Agreement |
|---|
| For SRS comb offset hopping and/or cyclic shift hopping, for each SRS port,<br>    • FFS: Hopping pattern<br>    • Support at least hopping based on slot index, OFDM symbol index<br>        o FFS: Use of symbol group based on repetition factor<br>        o FFS: Additional details on intra-slot hopping based on OFDM symbol index, inter-slot hopping based on slot index, per occasion of SRS resource<br>        o FFS: Re-initialization periodicity<br>    • Applicable to at least periodic/semi-persistent SRS with usage antennaSwitching FFS: Other types of SRS<br>    • FFS: Configuring a subset of comb offsets / cyclic shifts for comb offset hopping / cyclic shift hopping, respectively<br>    • FFS: Combined comb offset hopping and cyclic shift hopping, supporting both, or down selecting one |

| Agreement |
|---|
| For SRS comb offset hopping and/or cyclic shift hopping, for each SRS port, the hopping pattern is determined based on:<br>Option 1: The hopping pattern is based on the pseudo-random sequence c(i), initialized with a network-configured ID.<br><br>      FFS: The ID could be cell ID $n_{\mathrm{ID}}^{\mathrm{cell}}$, SRS sequence identity $n_{\mathrm{ID}}^{\mathrm{SRS}}$, C-RNTI, or a new ID<br>FFS: The relation between the legacy group / sequence hopping and the new hopping |

As mentioned in Proposal 2-5 above, it is agreed that the CS and/or comb offset hopping pattern is based on pseudo-random sequence c(i) based on a gold sequence (similar to PUCCH CS hopping) (see Table 6 below). In addition, a sequence initialization is scheduled to be performed by an ID such as a cell ID or SRS ID or C-RNTI.

[Table 6]

| 5.2.1 Pseudo-random sequence generation |
|---|
| Generic pseudo-random sequences are defined by a length-31 Gold sequence. The output sequence $c(n)$ of length $M_{\mathrm{PN}}$, where n = 0,1,..., $M_{\mathrm{PN}}$ -1, is defined by<br><br>$$c(n) = \left(x_1(n+N_C) + x_2(n+N_C)\right)\mathrm{mod}\,2$$<br>$$x_1(n+31) = \left(x_1(n+3) + x_1(n)\right)\mathrm{mod}\,2$$<br>$$x_2(n+31) = \left(x_2(n+3) + x_2(n+2) + x_2(n+1) + x_2(n)\right)\mathrm{mod}\,2$$<br>where $N_C$ = 1600 and the first m-sequence $x_1(n)$ shall be initialized with $x_1(0) = 1$, $x_1(n) = 0$, $n$ = 1,2,...,30. The initialization of the second m-sequence, $x_2(n)$, is denoted by $c_{\mathrm{init}} = \sum_{i=0}^{30} x_2(i)\cdot 2^i$ with the value depending on the application of the sequence. |

In addition, for CS and/or comb offset hopping, it is agreed that hopping is performed based on a symbol and a slot index, similarly to existing SRS sequence hopping or sequence group hopping. Additionally, an operation in which hopping is performed by use of a symbol group based on a repetition factor, per occasion of an SRS resource, or the like may be discussed.

Problem A. At least one of repetition, frequency hopping, and/or sequence group or sequence hopping may be configured in a specific SRS resource. In addition, when CS and/or comb offset hopping is supported, the CS and/or the comb offset lapping based on the symbol/slot index may be configured at the same time as the repetition/frequency hopping/sequence group or sequence lapping is configured for the specific SRS resource. A UE operation in such a case needs to be defined. This is described in Proposal A.

Proposal A

Hereinafter, UE operations when the repetition/frequency hopping/sequence group or sequence hopping and the CS and/or comb offset hopping are configured in a specific SRS resource will be described.

When the CS and/or comb offset hopping is performed based on the symbol/slot index as in the above-described agreements, a CS and/or a comb offset value by hopping is determined based on an (absolute) slot index in a slot. In this case, when repetition is configured together, the SRS symbol is repeated by R, and UE operations i) to iii) below may occur.

   i) The CS and/or comb offset hopping may be performed per symbol in R symbols.
   ii) When frequency hopping (FH) is performed together, the symbol index increases at the same time as the FH is performed, so that CS and/or comb offset hopping may be performed together with the FH.
   iii) Either sequence group or sequence hopping may also be performed with the CS and/or comb offset hopping with the increase of the symbol index.

'Either sequence group or sequence hopping' means group hopping or sequence hopped enabled during group hopping and sequence hopping.

Specific UE operations in cases i), ii) and iii) above will be described in detail in Proposals A-1, A-2 and A-3 below, respectively.

Proposal A-1

Hereinafter, a method for maintaining a CS and/or comb offset value when repetition is configured for the SRS resource (e.g., repetition factor R > 1) will be described.

Proposal A-1-1

When a PUCCH CS hopping equation is extensively applied to the SRS CS/comb offset hopping as described in Proposal 2-5 above, Equation 5 and Equation 6 below may be utilized for the SRS CS/comb offset hopping. In this case, since the SRS CS or comb offset value is determined by a slot index in a radio frame and the (absolute) symbol index in the slot, the CS/comb offset hopping may be performed as the SRS symbol increases.

[Equation 5]

$$\alpha_l = \frac{2\pi}{N_{sc}^{RB}} \left( \left( m_0 + n_{cs} \left( n_{s,f}^{\mu}, l + l' \right) \right) \bmod N_{sc}^{RB} \right)$$

[Equation 6]

$$n_{cs} \left( n_{s,f}^{\mu}, l \right) = \sum_{m=0}^{7} 2^m \, c \left( 8 N_{symb}^{slot} n_{s,f}^{\mu} + 8l + m \right)$$

When repetition is configured for a specific SRS resource, the UE may not perform the CS/comb offset hopping for the repetition factor R value, and may operate as follows in order to maintain an SRS CS/comb offset value.

In each SRS transmission instance of the corresponding SRS resource (for each SRS resource transmission periodicity), a CS/comb offset value obtained by applying a first (absolute) SRS symbol index (or an n-th or last SRS symbol index) in a repetition period to the CS/comb-offset hopping equation may be maintained to be the same during the repetition period.

According to an embodiment, in a next repetition period, a CS/comb offset value obtained by performing hopping (corresponding to 1 hop) in a previous repetition period is not uniformly applied. Specifically, a CS/Comb offset value obtained by applying the first (absolute) SRS symbol index (or the n-th or last SRS symbol index) in the next repetition period to the CS/comb offset hopping equation is uniformly applied. That is, a pattern related to the CS/comb offset hopping may be determined based on a symbol index of a first symbol of repetition based on the repetition factor.

Proposal A-1-2

When repetition is configured for a specific SRS resource, the CS/comb offset hopping is not performed for the repetition factor R value, and input parameters in Equations 5 and 6 may be changed and applied in order to maintain the SRS CS/comb offset value.

Specifically, an l value, which is the input parameter in Equations 5 and 6, may be applied/input in a modified form as follows. The 1 value may be modified to a form (e.g., $\lfloor l/R \rfloor$ ) in which the 1 value is divided by the R value and subjected to flooring, and input. That is, the CS/comb offset hopping may be modified as in Equations 7 and 8 below when performing the repetition.

[Equation 7]

$$\alpha_l = \frac{2\pi}{N_{\text{sc}}^{\text{RB}}} \left( \left( m_0 + n_{\text{cs}}\left(n_{\text{s,f}}^{\mu}, \lfloor l/R \rfloor + l'\right) \right) \bmod N_{\text{sc}}^{\text{RB}} \right)$$

[Equation 8]

$$n_{\text{cs}}\left(n_{\text{s,f}}^{\mu}, l\right) = \sum_{m=0}^{7} 2^m \, c\left(8 N_{\text{symb}}^{\text{slot}} n_{\text{s,f}}^{\mu} + 8\lfloor l/R \rfloor + m\right)$$

Effect by Proposal A-1: During an R symbol in which the SRS is repeated, a CS value is maintained, so that the base station may obtain a coverage enhancement effect simply by channel measurement without a separate sequence stripping operation. In addition, during the R symbol, the comb value hopping is not performed, so that the coverage enhancement effect for a same FR domain resource may be obtained.

Proposal A-2

Hereinafter, a method for maintaining the CS and/or comb offset value when frequency hopping (FH) is configured for the SRS resource will be described.

Proposal A-2-1

When the FH is configured for a specific SRS resource, the UE does not perform the CS/comb offset hopping during completing the FH, and may operate as follows in order to maintain the SRS CS/comb offset value.

(Similar to A-1-1) In each SRS transmission instance of the corresponding SRS resource (for each SRS resource transmission periodicity), the CS/comb offset value obtained by applying the first (absolute) SRS symbol index (or the n-th or last SRS symbol index) within a period of performing the FH (a periodicity of completing the FH) to the CS/comb-offset hopping equation may be maintained to be the same during a period of performing the corresponding FH by the UE.

Proposal A-2-2

When the FH is configured for a specific SRS resource, the CS/comb offset hopping is not performed during the completion of the FH, and input parameters in Equations 5 and 6 may be changed and applied in order to maintain the SRS CS/comb offset value.

Specifically, an 1 value, which is the input parameter in Equations 5 and 6, may be applied/input in a modified form as follows. The 1 value may be modified to a form (e.g., $\left\lfloor l/\prod_{b'=b_{\text{hop}}+1}^{b} N_{b'} \right\rfloor$ ) in which the 1 value is divided by a value corresponding to a number of hops required for completing frequency hopping (e.g., $\prod_{b'=b_{\text{hop}}+1}^{b} N_{b'}$, and/or $\prod_{b'=b_{\text{hop}}}^{b-1} N_{b'}$), and is subjected to flooring, and input. That is, the CS/comb offset hopping may be modified as in Equation 9 and 10 below when performing the FH.

[Equation 9]

$$\alpha_l = \frac{2\pi}{N_{\text{sc}}^{\text{RB}}} \left( \left( \left( m_0 + n_{\text{cs}} \left( n_{\text{s,f}}^{\mu} \left\lfloor l / \prod_{b'=b_{\text{hop}}+1}^{b} N_{b'} \right\rfloor + l' \right) \right) \right) \bmod N_{\text{sc}}^{\text{RB}} \right)$$

[Equation 10]

$$n_{\text{cs}} \left( n_{\text{s,f}}^{\mu}, l \right) = \sum_{m=0}^{7} 2^m c \left( 8 N_{\text{symb}}^{\text{slot}} n_{\text{s,f}}^{\mu} + 8 \left\lfloor l / \prod_{b'=b_{\text{hop}}+1}^{b} N_{b'} \right\rfloor + m \right)$$

Additional embodiment of Proposal A-1/2: Hereinafter, a method for maintaining the CS and/or comb offset value when the repetition and the frequency hopping (FH) are simultaneously configured for the SRS resource will be described.

The UE may operate based on a combination of Proposal A-1-1 and Proposal A-2-1.

As an example, in each SRS transmission instance of the corresponding SRS resource (for each SRS resource transmission periodicity), a CS/comb offset value obtained by applying a first (absolute) SRS symbol index (or an n-th or last SRS symbol index) in a period of finishing both the repetition and the FH to the CS/comb-offset hopping equation may be maintained to be the same during the repetition period and the FH period.

As an example, when the repetition and the FH are configured for a specific SRS resource, the CS/comb offset hopping is not performed during the completion of the repetition/FH, and input parameters in Equations 5 and 6 may be changed and applied in order to maintain the SRS CS/comb offset value.

Specifically, the 1 value may be modified to a form (e.g., $\left\lfloor l / (R * \prod_{b'=b_{\text{hop}}+1}^{b} N_{b'}) \right\rfloor$ ) in which the 1 value as an input parameter in Equations 5 and 6 is divided by a value corresponding to a product of R and a number of hops required for completing frequency hopping (e.g., $\prod_{b'=b_{\text{hop}}+1}^{b} N_{b'}$ and/or $\prod_{b'=b_{\text{hop}}}^{b-1} N_{b'}$ ), and is subjected to flooring, and input. That is, the CS/comb offset hopping may be modified as in Equations 11 and 12 below when performing the repetition.

[Equation 11]

$$\alpha_l = \frac{2\pi}{N_{\text{sc}}^{\text{RB}}} \left( \left( \left( m_0 + n_{\text{cs}} \left( n_{\text{s,f}}^{\mu} \left\lfloor l / (R * \prod_{b'=b_{\text{hop}}+1}^{b} N_{b'}) \right\rfloor + l' \right) \right) \right) \bmod N_{\text{sc}}^{\text{RB}} \right)$$

[Equation 12]

$$n_{\text{cs}} \left( n_{\text{s,f}}^{\mu}, l \right) = \sum_{m=0}^{7} 2^m c \left( 8 N_{\text{symb}}^{\text{slot}} n_{\text{s,f}}^{\mu} + 8 \left\lfloor l / (R * \prod_{b'=b_{\text{hop}}+1}^{b} N_{b'}) \right\rfloor + m \right)$$

Effects of Proposal A-2 and additional embodiment: The CS/comb offset hopping is performed in units of finishing the FH, so that the base station may easily implement the SRS interference randomization by assigning a randomized CS/comb offset value to each unit of finishing the FH for each SRS transmitted by each UE.

Proposal A-3

For ease of implementation of the UE, the UE does not expect that the either sequence group or sequence hopping and the CS/comb offset hopping are configured/indicated at the same time in SRS sequence generation. Through the corresponding operation, as the symbol index increases, only the either sequence group or sequences hopping is performed or only the CS/comb offset hopping is performed, thereby reducing a UE implementation complexity. In addition, both the either sequence group or sequence hopping and the CS/comb offset -hopping have a same purpose (SRS interference randomization), so that the base station may configure/indicate an either operation to the UE according to an environment. For example, the base station may configure/indicate enable of 'sequence group/sequence hopping' or 'CS/comb offset hopping' to the UE.

Problem B: When the CS/comb offset hopping is configured for a UE SRS, a re-initialization periodicity may need to be defined to finish the hopping and return to an origin. In the case of PUCCH CS hopping, the re-initialization periodicity is defined to return to the origin in units of the radio frame after the hopping is performed by the symbol index. However, when the SRS CS/comb offset-hopping is performed by an additional variable other than the symbol index as in the embodiments of Proposal A, an additional definition of the re-initialization may be required. This is described in Proposal B.

Proposal B

Embodiment 0

When the PUCCH CS hopping pattern is extensively applied as in Proposal 2-5 above, the re-initialization periodicity may be determined in units of the radio frame.

Embodiment 1

When a CS/comb offset value corresponding to a first symbol of repetition/FH is maintained and used during the repetition/FH as in Proposal A-1-1 and/or Proposal A-2-1, the re-initialization periodicity may be determined in units of the radio frame. A reason for utilizing the (absolute) symbol index is that Embodiment 1 is the same as Embodiment 0 above.

Embodiment 2

Hereinafter, when the repetition and/or FH is configured for the SRS resource, the re-initialization periodicity may be determined/defined as follows.

A value corresponding to i) the R value (repetition factor), ii) a number of hops required for completing frequency hopping, or iii) a product of R and the number of hops required for completing the frequency hopping may be a multiple of a number of hops required for finishing the CS/comb offset hopping. That is, an initialization periodicity may be defined/- determined as the value corresponding to i) the R value (repetition factor), ii) the number of hops required for completing the frequency hopping, or iii) the product of R and the number of hops required for completing the frequency hopping. The initialization period may be predefined or configured by the base station.

Embodiment 3

A number of symbols (of SRS resources) that finish sounding in a slot may be a multiple of the number of hops required to finish the CS/comb offset hopping (or/and such a constraint is imposed on the base station configuration). That is, a starting point of the CS/comb offset-hopping may be limited to be the same (return to the origin) for each slot.

In this case, since the CS/comb offset hopping pattern is the same for each slot (i.e., the CS/comb offset is performed from the origin), interference randomization may be facilitated even if the same time/FR resource is used between inter-UE SRSs within the slot.

Embodiment 4

The base station may configure how many slots (or how many symbols) to return to the origin after finishing the CS/comb offset hopping. In this case, since the base station determines the re-initialization periodicity, CS/comb resource and interference control of the SRS may be facilitated from the viewpoint of the NW.

Embodiment 5

It may be assumed that the base station is enabled to change/update an interval of CS/comb offset values between hops during CS/comb offset hopping of the SRS. Based on whether a repetition number/FH configured/indicated by the base station is configured, the CS/comb offset value may be finally configured to return to the origin/place when hopping is performed for a repetition number value/a time required to complete the FH during transmission of the corresponding SRS.

That is, as an example, if the CS/comb offset value may be shifted by 1 unit and returned to the original place after N times when the repetition number is N, the CS/comb off value may be increased by 2 units and returned to the original place after N/2 times when the repetition number is N/2.

As an example, values to information related to initialization based on at least one of Embodiments 0 to 5 described above may be configured as follows.

i) Re-initialization related information may be configured per UE (or per serving cell).
ii) The re-initialization related information may be configured for each SRS resource.

The re-initialization related information may include at least one of i) a radio frame unit periodicity, ii) an indication of R (repetition factor) based initialization, iii) an indication for frequency hopping related hop number based initialization, iv) an indication for R * hop number based initialization, v) an indication for SRS related slot based initialization, and vi) a number of slots and/or a number of symbols.

As an example, the re-initialization related information may be based on a higher layer parameter in a serving cell configuration (e.g., ServingCellConfig), SRS configuration information (e.g., SRS-config), or an SRS resource configuration (e.g., SRS-resource).

As an example, the re-initialization related information may be configured to be the same for all UEs in a cell. That is, the re-initialization related information may be cell-common information. As a specific example, the re-initialization related information may be based on a higher layer parameter in a System Information Block (SIB) or a serving cell common configuration (e.g., ServingCellConfigCommon).

It is apparent that the equations proposed as above do not limit the spirit of the present disclosure, and modifications of the equations may also be included in the spirit of the present disclosure.

An example of the UE (or base station) operation based on at least one of the embodiments described above (e.g. at least one of Proposal 1, Proposal 2, Proposal 2-1, Proposal 2-2, Proposal 2-3, Proposal 2-4, Proposal 2-5, Proposal A, and/or Proposal B) is as follows.

1) (M-TRP related) Receiving (transmitting) SRS related configuration information

Specifically, the configuration information may include information based on at least one of Proposal 1, Proposal 2, Proposal 2-1, Proposal 2-2, Proposal 2-3, Proposal 2-4, Proposal 2-5, Proposal A, and/or Proposal B. As an example, based on the configuration information, a plurality of spatialRelationInfo/TCIs may configured/indicated for an SRS resource in a specific SRS resource set. As an example, based on the configuration information, at least one of 1) the sequence initialization factor, 2) the sequence (group) hopping pattern, 3) the frequency hopping pattern, 4) the RPFS pattern, 5) the comb offset, 6) the comb offset hopping pattern, 7) the cyclic shift, and/or 8) the cyclic shift hopping pattern may be differently configured/indicated for different SRS resources (sets) having different desired/target TRPs.

2) Transmitting (receiving) SRS based on P/SP/AP-SRS transmission configuration/activation/indication

Specifically, the UE may transmit an SRS resource set(s) configured/activated/indicated by RRC/MAC CE/DCI based on at least one of Proposal 1, Proposal 2, Proposal 2-1, Proposal 2-2, Proposal 2-3, Proposal 2-4, Proposal 2-5, Proposal A, and/or Proposal B.

The UE/base station operations are only examples, and each operation (or step) is not necessarily required, and operations related to uplink transmission of the UE according to the above-described embodiments may be omitted or added depending on the UE/base station implementation scheme.

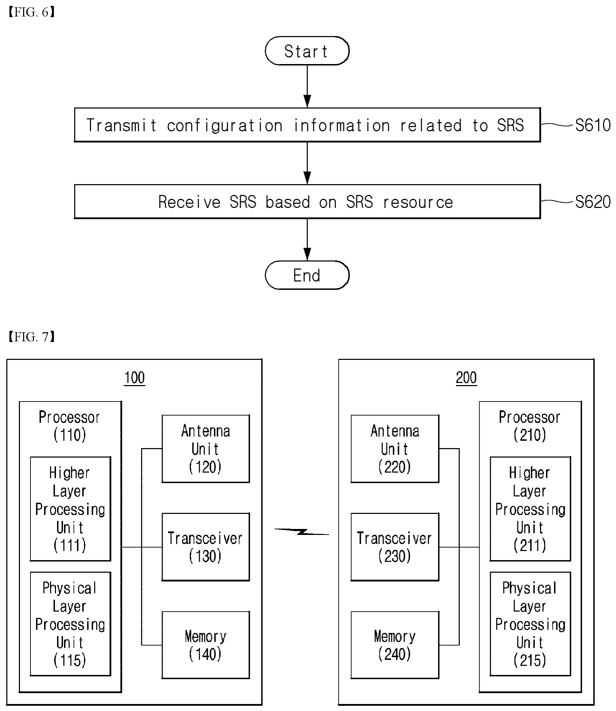

In terms of implementation, the operations of the base station/UE according to the above-described embodiments (e.g., operations based on at least one of Proposal 1, Proposal 2, Proposal 2-1, Proposal 2-2, Proposal 2-3, Proposal 2-4, Proposal 2-5, Proposal A, and/or Proposal B) may be processed by devices in FIG. 7 to be described below (e.g., processors 110 and 210 in FIG. 7).

Further, the operations of the base station/UE according to the above-described embodiments (e.g., operations based on at least one of Proposal 1, Proposal 2, Proposal 2-1, Proposal 2-2, Proposal 2-3, Proposal 2-4, Proposal 2-5, Proposal A, and/or Proposal B) may be stored in memories (e.g., 140 and 240 in FIG. 7) in the form of instructions/programs (e.g., instructions and executable codes) for driving at least one processor (e.g., 110 and 210 in FIG. 7).

Hereinafter, the above-described embodiments will be described in detail with reference to FIGS. 5 and 6 in terms of the operations of the UE and the base station. Methods to be described below are just distinguished for convenience of description and it is needless to say that some components of any one method may be substituted with some components of another method or may be applied in combination with each other.

FIG. 5 is a flowchart for describing a method performed by a user equipment (UE) according to one embodiment of the present disclosure.

Referring to FIG. 5, a method performed by a UE in a wireless communication system according to an embodiment of the present disclosure includes a step of receiving configuration information related to an SRS (S510) and a step of transmitting an SRS based on an SRS resource (S520).

In S510, the UE receives configuration information related to a sounding reference signal (SRS) from a base station. The configuration information includes information for an SRS resource (e.g., SRS-Resource). As one example, the configuration information may be based on SRS-Config in Table 1.

The configuration information may include information related to a configuration which is based on at least one of Proposal 1, Proposal 2, Proposal 2-1, Proposal 2-2, Proposal 2-3, Proposal 2-4, Proposal 2-5, Proposal A, and/or Proposal B.

As an example, comb offset hopping and/or cyclic shift hopping may be configured in the SRS resource. A hopping pattern related to the comb offset hopping and/or the cyclic shift hopping may be based on a pseudo-random sequence.

In S520, the UE transmits, to the base station, the SRS to the BS based on the SRS resource.

As an example, the SRS may be transmitted based on at least one of 1) the sequence initialization factor, 2) the sequence (group) hopping pattern, 3) the frequency hopping pattern, 4) the RPFS pattern, 5) the comb value, 6) the comb value hopping pattern, 7) the cyclic shift, and/or 8) the cyclic shift hopping pattern based on the above-described embodiment.

As an example, the SRS may be a periodic SRS, an aperiodic SRS, or a semi-persistent SRS.

According to an embodiment, an initialization related to the comb offset hopping and/or the cyclic shift hopping may be performed based on a periodicity. The embodiment may be based on Proposal B. Hereinafter, this will be specifically described.

The periodicity may be determined based on at least one of i) a configured value, ii) a repetition factor related to the SRS, iii) a value related to frequency hopping, and/or iv) a slot related to the SRS.

As an example, the configured value may be a value in units of a radio frame, a slot, or a symbol.

As an example, the periodicity may be determined as a product of the repetition factor and the value related to the frequency hopping.

As an example, the initialization may be related to the pseudo-random sequence. The periodicity may be related to a beginning of a radio frame. As a specific example, the periodicity may be based on a periodicity in which the radio frame is repeated. The periodicity may be defined as a value for a modulo operation of a System Frame Number (SFN) related to the radio frame. A case in which the periodicity is determined as N will be assumed and described. The radio frame may be based on each radio frame with SFN mod N = 0.

According to an embodiment, the hopping pattern (related to the comb offset hopping and/or the cyclic shift hopping) may be determined based on a symbol index of a first symbol of repetition based on the repetition factor. The embodiment may be based on Proposal A-1. Specifically, the symbol index of the first symbol may be determined based on $\left\lfloor \frac{l'}{R} \right\rfloor$ . $l'$ may be a symbol number based on the number of symbols configured in the SRS resource. R may be the repetition factor. $\lfloor \rfloor$ may be a floor function. The repetition factor is larger than 1.

The method may further include a step of receiving periodicity related information. Specifically, the UE receives, from the base station, configuration information related to the periodicity. A factor related to the determination of the periodicity may be indicated based on the information related to the periodicity. The embodiment may be based on Proposal B. The factor may be i) a value in units of a radio frame, a slot, or a symbol, ii) the repetition factor, iii) the value related to the frequency hopping (e.g., a number of hops), iv) a product of the repetition factor and the value related to the frequency hopping, or v) a slot related to the SRS.

The operations based on S510 and S520 and the periodicity related information receiving step described above may be implemented by devices in FIG. 7. For example, a UE 200 may control one or more transceivers 230 and/or one or more memories 240 to perform the operations based on S510 and S520 and the periodicity related information receiving step.

Hereinafter, the embodiments described above will be specifically described in terms of the operations of the base station.

S610 and S630, and a periodicity related information transmitting step described below correspond to S510 and S520, and the periodicity related information receiving step described in FIG. 5. By considering the correspondence relationship, redundant descriptions are omitted. That is, a specific description of base station operations described below may be replaced with the description/embodiment of FIG. 5 corresponding to the corresponding operation.

FIG. 6 is a flowchart for describing a method performed by a base station according to another embodiment of the present disclosure.

In S610, the base station transmits configuration information related to a Sounding Reference Signal (SRS) to the UE. The configuration information includes information for an SRS resource (e.g., SRS-Resource). As an example, the configuration information may be based on SRS-Config in Table 1.

In S620, the base station receives, from the UE, the SRS based on the SRS resource.

The method may further include a step of transmitting information related to a periodicity. Specifically, the base station transmits, to the UE, the information related to the periodicity.

The operations based on S610 and S620 and the periodicity related information transmitting step described above may be implemented by the devices in FIG. 7. For example, a base station 100 may control one or more transceivers 130 and/or one or more memories 140 to perform the operations based on S610 and S620 and the periodicity related information transmitting step.

A device to which an embodiment of the present disclosure is applicable (a device implementing the method/operation according to an embodiment of the present disclosure) is described below with reference to FIG. 7.

FIG. 7 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 200 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

**Claims**

1. A method performed by a user equipment (UE) in a wireless communication system, the method comprising:

   receiving configuration information related to a Sounding Reference Signal (SRS), wherein the configuration information includes information for an SRS resource,
   wherein comb offset hopping and/or cyclic shift hopping is configured for the SRS resource; and
   transmitting the SRS based on the SRS resource,
   wherein an initialization related to the comb offset hopping and/or the cyclic shift hopping is performed based on a periodicity,
   wherein the periodicity is determined based on at least one of i) a configured value, ii) a repetition factor related to the SRS, iii) a value related to frequency hopping, and/or iv) a slot related to the SRS.

2. The method of claim 1, wherein the configured value is a value in units of a radio frame, a slot, or a symbol.

3. The method of claim 1, wherein the periodicity is determined as a product of the repetition factor and the value related to the frequency hopping.

4. The method of claim 1, wherein a hopping pattern related to the comb offset hopping and/or the cyclic shift hopping is based on a pseudo-random sequence.

5. The method of claim 4, wherein the initialization is related to the pseudo-random sequence, and wherein the periodicity is related to a beginning of a radio frame.

6. The method of claim 4, wherein the hopping pattern is determined based on a symbol index of a first symbol of a repetition based on the repetition factor.

7. The method of claim 6, wherein the symbol index of the first symbol is determined based on $\left\lfloor \frac{l'}{R} \right\rfloor$, $l'$ is a symbol number based on a number of symbols configured in the SRS resource, R is the repetition factor, and $\lfloor \ \rfloor$ is a floor function.

8. The method of claim 7, wherein the repetition factor is larger than 1.

9. The method of claim 1, further comprising:

   receiving information related to the periodicity,
   wherein a factor related to the determination of the periodicity is indicated based on the information related to the periodicity.

10. The method of claim 9, wherein the factor is i) a value in units of a radio frame, a slot, or a symbol, ii) the repetition factor, iii) the value related to the frequency hopping, iv) a product of the repetition factor and the value related to the frequency hopping, or v) a slot related to the SRS.

11. A user equipment operating in a wireless communication system, the user equipment comprising:

   one or more transceivers;
   one or more processors; and
   one or more memories connected to the one or more processors and storing instructions,
   wherein the instructions configure the one or more processors to perform all steps of a method according to any one of claims 1 to 10 based on being executed by the one or more processors.

12. A device comprising:

   one or more memories; and
   one or more processors operably connected to the one or more memories,
   wherein the one or more memories store instructions that configure the one or more processors to perform all steps of a method according to any one of claims 1 to 10 based on being executed by the one or more processors.

13. One or more non-transitory computer readable mediums storing instructions,
    wherein the instructions executable by one or more processors configure the one or more processors to perform all steps of a method according to any one of claims 1 to 10.

14. A method performed by a base station in a wireless communication system, the method comprising:

    transmitting configuration information related to a Sounding Reference Signal (SRS), wherein the configuration information includes information for an SRS resource,
    wherein comb offset hopping and/or cyclic shift hopping is configured for the SRS resource; and
    receiving the SRS based on the SRS resource,
    wherein an initialization related to the comb offset hopping and/or the cyclic shift hopping is performed based on a periodicity,
    wherein the periodicity is determined based on at least one of i) a configured value, ii) a repetition factor related to the SRS, iii) a value related to frequency hopping, and/or iv) a slot related to the SRS.

15. A base station operating in a wireless communication system, the base station comprising:

    one or more transceivers;
    one or more processors; and
    one or more memories connected to the one or more processors and storing instructions,
    wherein the instructions configure the one or more processors to perform all steps of a method according to claim 14 based on being executed by the one or more processors.

**EP 4 668 652 A1**

【FIG. 1】

30

EP 4 668 652 A1

【FIG. 2】

TRP 1

Layer group #1
for CW #1

TRP 2

Layer group #2
for CW #1

UE1

(a)

TRP 1

Layer group #1
for CW #1

TRP 2

Layer group #2
for CW #2

UE1

(b)

【FIG. 3】

PDCCH     Slot offset(DCI)=1     Slot offset(DCI)=2

| D | D | U | U | D | D | U | U |

Slot n   Slot n+1   Slot n+2   Slot n+3   Slot n+4   Slot n+5   Slot n+6   Slot n+7

Reference slot
Slot offset(RRC)=2

【FIG. 4】

Partial frequency index 0

Partial bandwidth

Partial frequency index 1

SRS hopping period

【FIG. 5】

Start

Receive configuration information related to SRS — S510

Transmit SRS based on SRS resource — S520

End

【FIG. 6】

```
            ( Start )
                │
                ▼
┌─────────────────────────────────────────────────────┐
│ Transmit configuration information related to SRS    │──S610
└─────────────────────────────────────────────────────┘
                │
                ▼
┌─────────────────────────────────────────────────────┐
│ Receive SRS based on SRS resource                    │──S620
└─────────────────────────────────────────────────────┘
                │
                ▼
             ( End )
```

【FIG. 7】

```
┌─────────────────────────────┐              ┌─────────────────────────────┐
│            100              │              │            200              │
│ ┌──────────┐ ┌──────────┐   │              │  ┌──────────┐ ┌──────────┐  │
│ │Processor │ │ Antenna  │   │              │  │ Antenna  │ │Processor │  │
│ │ (110)    │ │ Unit     │   │              │  │ Unit     │ │ (210)    │  │
│ │ ┌──────┐ │ │ (120)    │   │              │  │ (220)    │ │ ┌──────┐ │  │
│ │ │Higher│ │ └──────────┘   │              │  └──────────┘ │ │Higher│ │  │
│ │ │Layer │ │                │              │               │ │Layer │ │  │
│ │ │Proce-│ │ ┌──────────┐   │     ∿        │  ┌──────────┐ │ │Proce-│ │  │
│ │ │ssing │ │ │Transceiver│  │              │  │Transceiver│ │ │ssing │ │  │
│ │ │Unit  │ │ │ (130)    │   │              │  │ (230)    │ │ │Unit  │ │  │
│ │ │(111) │ │ └──────────┘   │              │  └──────────┘ │ │(211) │ │  │
│ │ └──────┘ │                │              │               │ └──────┘ │  │
│ │ ┌──────┐ │ ┌──────────┐   │              │  ┌──────────┐ │ ┌──────┐ │  │
│ │ │Physi-│ │ │ Memory   │   │              │  │ Memory   │ │ │Physi-│ │  │
│ │ │cal   │ │ │ (140)    │   │              │  │ (240)    │ │ │cal   │ │  │
│ │ │Layer │ │ └──────────┘   │              │  └──────────┘ │ │Layer │ │  │
│ │ │Proce-│ │                │              │               │ │Proce-│ │  │
│ │ │ssing │ │                │              │               │ │ssing │ │  │
│ │ │Unit  │ │                │              │               │ │Unit  │ │  │
│ │ │(115) │ │                │              │               │ │(215) │ │  │
│ │ └──────┘ │                │              │               │ └──────┘ │  │
│ └──────────┘                │              │               └──────────┘  │
└─────────────────────────────┘              └─────────────────────────────┘
```

## INTERNATIONAL SEARCH REPORT

| International application No. |
| --- |
| **PCT/KR2024/002144** |

### A. CLASSIFICATION OF SUBJECT MATTER

**H04L 5/00**(2006.01)i; **H04W 72/232**(2023.01)i; **H04L 25/02**(2006.01)i; **H04L 27/26**(2006.01)i

According to International Patent Classification (IPC) or to both national classification and IPC

### B. FIELDS SEARCHED

Minimum documentation searched (classification system followed by classification symbols)

H04L 5/00(2006.01); H04B 7/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SRS, comb offset hopping, cyclic shift hopping, 초기화(initialization), 주기 (periodicity)

### C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | MODERATOR (FUTUREWEI). FL Summary #5 on SRS enhancements. R1-2212941, 3GPP TSG RAN WG1 Meeting #111. Toulouse, France. 21 November 2022.<br>See pages 2-10, 24 and 50. | 1-2,4-6,9-15<br>3<br>7-8 |
| Y | ZTE. SRS enhancement targeting TDD CJT and 8 TX operation. R1-2205922, 3GPP TSG RAN WG1 Meeting #110. Toulouse, France. 12 August 2022.<br>See pages 2-3. | 3 |
| A | ERICSSON. On SRS enhancements targeting TDD CJT and 8 TX operation. R1-2212377, 3GPP TSG RAN WG1 Meeting #111. Toulouse, France. 07 November 2022.<br>See pages 1-19. | 1-15 |
| A | GOOGLE. On SRS Enhancement. R1-2211120, 3GPP TSG RAN WG1 Meeting #111. Toulouse, France. 07 November 2022.<br>See pages 1-7. | 1-15 |

☑ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **28 May 2024** | **28 May 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/002144**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2021-0101339 A (LG ELECTRONICS INC.) 18 August 2021 (2021-08-18) See paragraphs [0040]-[0041] and [0085]-[0105]. | 1-15 |

## INTERNATIONAL SEARCH REPORT
### Information on patent family members

International application No.

**PCT/KR2024/002144**

| Patent document cited in search report | | | Publication date (day/month/year) | Patent family member(s) | | | Publication date (day/month/year) |
|---|---|---|---|---|---|---|---|
| KR | 10-2021-0101339 | A | 18 August 2021 | CA | 3071085 | A1 | 31 January 2019 |
| | | | | CA | 3071085 | C | 22 August 2023 |
| | | | | CN | 110945824 | A | 31 March 2020 |
| | | | | CN | 110945824 | B | 02 December 2022 |
| | | | | CN | 115767749 | A | 07 March 2023 |
| | | | | EP | 3661097 | A1 | 03 June 2020 |
| | | | | EP | 3661097 | A4 | 07 April 2021 |
| | | | | EP | 3661097 | B1 | 27 March 2024 |
| | | | | JP | 2020-528690 | A | 24 September 2020 |
| | | | | KR | 10-2020-0008599 | A | 28 January 2020 |
| | | | | KR | 10-2290761 | B1 | 18 August 2021 |
| | | | | KR | 10-2355636 | B1 | 08 February 2022 |
| | | | | US | 11558161 | B2 | 17 January 2023 |
| | | | | US | 2021-0083825 | A1 | 18 March 2021 |
| | | | | US | 2023-0121186 | A1 | 20 April 2023 |
| | | | | WO | 2019-022329 | A1 | 31 January 2019 |

Form PCT/ISA/210 (patent family annex) (July 2022)